# EUROPEAN PATENT SPECIFICATION

(11) **EP 3 462 754 B1**
(45) Date of publication and mention of the grant of the patent: **15.12.2021**
(21) Application number: 17193681.8
(22) Date of filing: 28.09.2017
(51) Int. Cl.: H04W 4/02, H04W 4/20, H04W 8/00, H04L 29/08, H04W 4/06, H04W 28/00, H04W 84/18, H04W 28/02

(54) **APPARATUS AND METHOD FOR V2X COMMUNICATION**
VORRICHTUNG UND VERFAHREN ZUR V2X-KOMMUNIKATION
APPAREIL ET PROCÉDÉ DE COMMUNICATION V2X

(43) Date of publication of application: 03.04.2019
(73) Proprietor: LG ELECTRONICS INC., Yeongdeungpo-Gu Seoul 07336 (KR)
(72) Inventor: HWANG, Jaeho, Seoul 06772 (KR); KO, Woosuk, Seoul 06772 (KR)
(74) Representative: Plasseraud IP

(56) References cited:
- EP-A1- 3 121 762

## Description

### BACKGROUND OF THE INVENTION

The present invention disclosed herein relates to an apparatus and method for Vehicle to Everything (V2X) communication, and more particularly, to a method of transmitting/receiving a V2X message by a V2X communication device for V2X communication.

Recently, vehicles are becoming a product of complex industrial technology, in which electrical, electronic and communication technologies are fused, centering on mechanical engineering. In this respect, vehicles are also called smart cars. Smart cars are providing various customized mobile services, as well as traditional vehicle technologies such as traffic safety/congestion settlement by connecting drivers, vehicles, and transportation infrastructures. This connectivity may be implemented using a Vehicle to Everything (V2X) communication technology.

EP3121762 A1 discloses sensor fusion of camera and V2V data for vehicles.

### SUMMARY OF THE INVENTION

Various services may be provided through V2X communication. A V2X communication device of a vehicle which performs V2X communication may provide various services for traffic safety and efficiency. One of those services may be a Cooperative Awareness (CA) service. The Cooperative Awareness in road traffic means that road users and roadside infrastructures can know mutual positions, dynamics and attributes. This awareness of each other becomes basics of many road safety and traffic efficiency applications.

Thus, in regard to the CA service, the V2X communication device may periodically provide its own position and state to surrounding V2X communication devices, thereby supporting traffic safety. However, the CA service has a limitation in that only information of the corresponding V2X communication device itself can be shared. In order to overcome this limitation, it is necessary to develop a new type of service.

The invention is defined by the appended claims.

In the following, any embodiments not falling within the scope of the claims should be taken as examples and/or background information useful better understanding of the invention.

### BRIEF DESCRIPTION OF THE DRAWINGS

The accompanying drawings are included to provide a further understanding of the present invention, and are incorporated in and constitute a part of this specification. The drawings illustrate exemplary embodiments of the present invention and, together with the description, serve to explain principles of the present invention. In the drawings:
FIG. 1 is a view illustrating an exemplary architecture of an V2X communication device according to an embodiment of the present invention;
FIG. 2 is a view illustrating a method of processing a V2X message according to an embodiment of the present invention;
FIG. 3 is a view illustrating an exemplary architecture of an V2X communication device providing a CP service according to an embodiment of the present invention;
FIG. 4 is a view illustrating a function blocks of a CP service according to an embodiment of the present invention;
FIG. 5 is a view illustrating a CPM structure according to an embodiment of the present invention;
FIG. 6 is a view illustrating a method of extracting sensor data by an V2X communication device providing a CP service according to an exemplary embodiment of the present invention;
FIG. 7 is a view illustrating a method by which a V2X communication device communicates with another V2X communication device according to an embodiment of the present invention;
FIG. 8 is a view illustrating a method by which a V2X communication device communicates with another V2X communication device using CAM according to an embodiment of the present invention;
FIG. 9 is a view illustrating a method by which an V2X communication device communicates with another V2X communication device using CPM according to an embodiment of the present invention;
FIG. 10 is a view illustrating a method of transmitting a CPM by an V2X communication device in a congested environment according to an embodiment of the present invention;
FIG. 11 is a view illustrating a CPM structure according to an embodiment of the present invention;
FIG. 12 is a view illustrating an OVC in the CPM of FIG. 11;
FIG. 13 is a view illustrating a SPOC in the CPM of FIG. 11;
FIG. 14 is a view illustrating matching ratio information of FIG. 12 or FIG. 13;
FIG. 15 is a view illustrating a method by which a V2X communication device communicates with another V2X communication device using CPM according to an embodiment of the present invention;
FIG. 16 is a view illustrating a method by which a V2X communication device communicates with another V2X communication device using CPM according to another embodiment of the present invention;
FIG. 17A is a view illustrating a state of a communication channel when the CPM structure of FIG. 4 is used, and FIG. 17B is a view illustrating a state of a communication channel when the CPM structure of FIG. 10 is used;
FIG. 18 is a view illustrating a method of determining, by a V2X communication device, whether or not a transmission detection object is the same object as a surrounding vehicle that has transmitted a receiving V2X message according to an embodiment of the present invention;
FIG. 19 is a view illustrating a method of determining, by a V2X communication device, whether or not the V2X communication device is the same object as a receiving detection object according to an embodiment of the present invention;
FIG. 20 is a view illustrating a method of calculating matching ratio information by a V2X communication device according to an embodiment of the present invention;
FIG. 21 is a view illustrating a method of generating and transmitting, by an originating vehicle, a CPM in a first situation according to an embodiment of the present invention;
FIG. 22 is a view illustrating the CPM generated by the originating vehicle of FIG. 21;
FIG. 23 is a view illustrating a method of generating and transmitting, by an originating vehicle, a CPM in a second situation according to an embodiment of the present invention;
FIG. 24 is a view illustrating the CPM generated by the originating vehicle of FIG. 22;
FIG. 25 is a view illustrating a method of generating and transmitting, by an originating vehicle, a CPM in a third situation according to an embodiment of the present invention;
FIG. 26 is a view illustrating the CPM generated by the originating vehicle of FIG. 25;
FIG. 27 is a view illustrating a configuration of a V2X communication device according to an embodiment of the present invention; and
FIG. 28 is a flowchart illustrating a method of transmitting an V2X message by an V2X communication device according to an embodiment of the present invention.

### DETAILED DESCRIPTION OF PREFERRED EMBODIMENTS

Preferred embodiments of the present invention will be described in detail with reference to the accompanying drawings. The following detailed description with reference to the accompanying drawings is to illustrate preferred embodiments of the present invention rather than illustrate only embodiments that can be implemented according to embodiments of the present invention. The following detailed description includes details in order to provide the full understanding of the present invention, but the present invention does not require all of these details. The embodiments described below need not be separately used. A plurality of embodiments or all embodiments may be together used, and specific embodiments may be used in combination with each other.

Most of the terms used in this disclosure are selected from common ones widely used in the corresponding field, but some terms are arbitrarily selected by the applicant and the meaning thereof will be described in detail in the following description as necessary. Therefore, the present invention should be understood based on the intended meanings of the terms rather than the simple names or meanings of the terms.

The present disclosure relates to a V2X communication device, wherein the V2X communication device is included in an Intelligent Transport System (ITS) system and may perform all or part of the functions of the ITS system. The V2X communication devices may communicate with vehicle and vehicle, vehicle and infrastructure, vehicle and bicycle, and mobile devices. As an embodiment, the V2X communication device may correspond to an on-board unit (OBU) of a vehicle, or may be included in an OBU. The OBU may be referred to OBE (On Board Equipment). The V2X communication device may correspond to an infrastructure's road side unit (RSU) or may be included in an RSU. The RSU may also be referred to RSE (RoadSide Equipment). Alternatively, the V2X communication device may correspond to an ITS station or may be included in an ITS station. Any OBU, RSU and mobile equipment performing V2X communication may be referred to as ITS stations. Alternatively, the V2X communication device may correspond to a Wireless Access in Vehicular (WAVE) device or may be included in a WAVE device. The V2X communication device may be referred to a V2X device.

Hereinafter, a Collective Perception (CP) service provided by the V2X communication device and a basic structure of the CP Message (CPM) for the CP service will be described. Also, various embodiments of the CPM structure for improving the performance of the CP service will be described. On the other hand, various embodiments will be described herein assuming that the V2X communication device generating the CPM is a V2X communication device of vehicle (vehicle V2X communication device). However, according to circumstances, the following embodiments may also be applied to the V2X communication device of RSU (RSU V2X communication device or roadside V2X communication device) or the V2X communication device of personal (personal V2X communication device) in the same or similar manner.

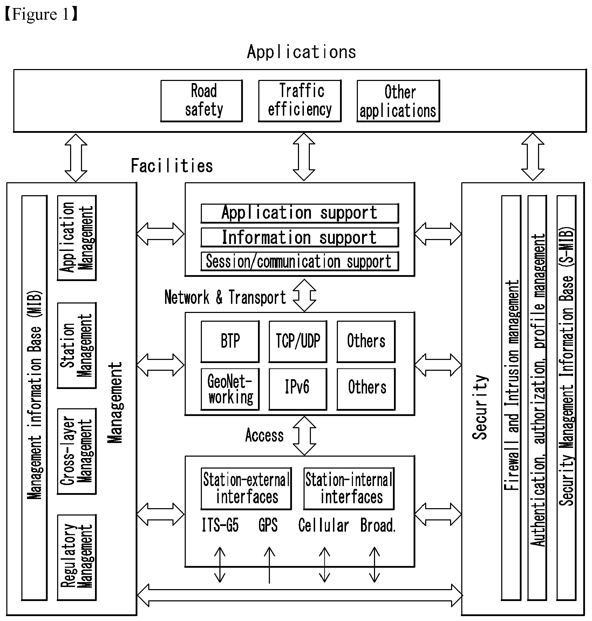

FIG. 1 is a view illustrating an exemplary architecture of an V2X communication device according to an embodiment of the present invention. FIG. 1 may be an exemplary architecture of a V2X communication device that may be implemented based on, for example, the reference architecture of an ITS station compliant with the EU standard.

Application layer: The application layer may implement and support various use cases. For example, an application may provide road safety, efficient traffic information, and other application information.

Facilities layer: The facilities layer may support effective implementation of various usage examples defined in the application layer.

This facilities layer may basically support the same or similar functions as the upper three layers of an OSI model. In addition, facilities for the V2X communication device may be provided. For example, the facilities layer may provide facilities such as application support, information support, and session/communication support. Here, the facilities refer to a component that provides functionality, information, and data. The three facilities proposed as an example will be described as follows.

The application support facility refers to a facility that supports a basic application set (or message set). In the case of the V2X communication device of FIG. 1, the facilities layer may support V2X messages/ITS messages, for example, a periodic message such as CAM or an event message such as Decentralized Environmental Notification Messages (DENM). The facilities layer may also support, for example, CPM messages.

The information support facility may be a facility that provides common data information or database used for a basic application set (or message set), and may be, for example, a Local Dynamic Map (LDM).

The session/communication support facility is a facility that provides services for communication and session management, and may be an addressing mode, a session support and the like.

As described above, the facilities layer supports the application set (or message set) as one of main functions thereof. That is, the facilities layer performs a role of generating a message set (or message) based on information to be transmitted or a service to be provided by the application layer. The generated message may be referred to as an V2X message/ITS message, which will be described in detail below with reference to the accompanying drawings.

Access layer: The access layer may transmit the message/data received at the upper layers through a physical channel. For example, the access layer may perform/support data communication, based on an IEEE 802.11 and/or 802.11p standards-based communication technology, an ITS-G5 wireless communication technology based on a physical transmission technology of the IEEE 802.11 and/or 802.11p standards, a 2G/3G/4G (LTE)/5G wireless cellular communication technology including satellite/broadband wireless mobile communication, a broadband terrestrial digital broadcasting technology such as DVB-T/T2/ATSC, a GPS technology, and an IEEE 1609 WAVE technology.

Network and Transport Layer: The network/transport layer may configure a network for vehicle communication between homogenous/heterogeneous networks, by using various transport protocols and network protocols.

The transport layer is a connection layer between services provided by the upper layers (session layer, presentation layer, and application layer) and the lower layers (network layer, data link layer, and physical layer). The transport layer may manage the transmitted data to exactly arrive at a destination. At the transmitting side, the transport layer may process the data into packets of an appropriate size for efficient data transmission, and at the receiving side, the transport layer may perform processing to recover the received packets to the original file. In an embodiment, protocols such as Transmission Control Protocol (TCP), User Datagram Protocol (UDP), and Basic Transport Protocol (BTP) may be used as a transport protocol.

The network layer may manage the logical address, and may determine the delivery path of the packet. The network layer may receive the packet generated in the transport layer, and may add the logical address of the destination to a network layer header. In an embodiment, the packet path may be considered for unicast/broadcast between vehicles, between vehicles and fixed stations, and between fixed stations. In an embodiment, geo-networking, IPv6 networking with mobility support, and IPv6 over geo-networking may be considered as the networking protocol.

The exemplary architecture of V2X communication device may further include a management layer and a security layer.

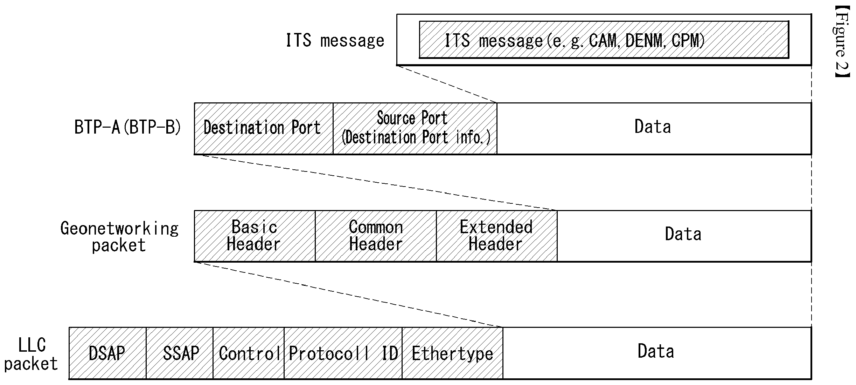

FIG. 2 is a view illustrating a method of processing a V2X message according to an embodiment of the present invention.

As described above, the application layer or the facilities layer may generate a V2X message. For example, a CAM, a DENM, or a CPM message may be generated as the V2X message.

The transport layer may generate a BTP packet, and the network layer may encapsulate the BTP packet to generate a geonetworking packet. The geonetworking packet may be encapsulated into an LLC packet. In the embodiment of FIG. 2, the data may include a message set, and the message set may become a basic safety message.

BTP is a protocol for transmitting the V2X message generated in a facilities layer to a lower layer. A BTP header includes A type and B type. The A type BTP header may include a destination/destination port and a source port, which are necessary for transmission/reception in interactive packet transmission. The B type header may include destination port and destination port information necessary for transmission in non-interactive packet transmission. A description of fields/information included in the header is as follows.

Destination Port: The destination port identifies a facility entity corresponding to the destination of the data (BTP-PDU) included in the BTP packet.

Source Port: As a field generated in the case of the BTP-A type, the sound port indicates the port of the protocol entity of the facilities layer at a source to which the corresponding packet is transmitted. This field may have a size of 16 bits.

Destination Port Info: As a field generated in the case of the BTP-B type. The destination port info may provide additional information when the destination port is the most well-known port. This field may have a size of 16 bits.

The geonetworking packet includes a basic header and a common header according to the protocol of the network layer, and selectively includes an extension header according to the geo networking mode. The geonetworking header will be again described below.

An LLC header is added to the geonetworking packet to generate an LLC packet. The LLC header provides a function of distinguishing and transmitting IP data and geonetworking data. The IP data and the geonetworking data may be distinguished by Ethertype of SNAP. In an embodiment, when IP data is transmitted, the Ether type may be set to 0x86DD and included in the LLC header. In an embodiment, when geonetworking data is transmitted, the Ether type may be set to 0x86DC and included in the LLC header. A receiver may check the Ethertype field of the LLC packet header, and may forward and process the packet to the IP data path or the geonetworking path according to the value of the Ethertype field of the LLC packet header.

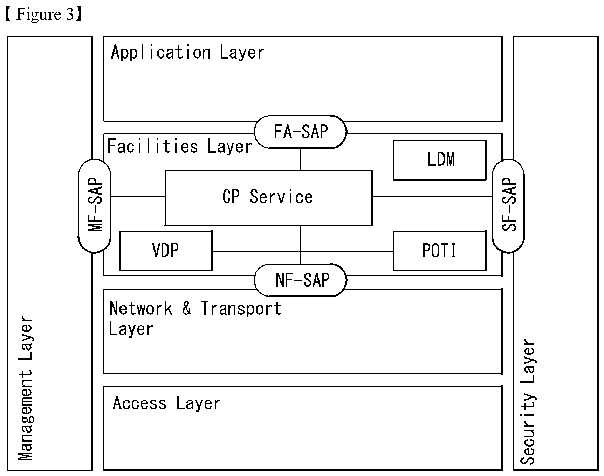

FIG. 3 is a view illustrating an exemplary architecture of an V2X communication device providing a CP service according to an embodiment of the present invention.

The V2X communication device may provide various services for traffic safety and efficiency. One of the services may be a Cooperative Awareness (CA) service. The Cooperative Awareness in road traffic means that road users and roadside infrastructures can know mutual positions, dynamics and attributes. Here, the road users may be all kinds of users on a road or near a road, which act as traffic safety and control, such as a vehicle, a truck, a motorcycle, a bicycle or a pedestrian, and the roadside infrastructures may be equipment including a road sign, a traffic light or a barrier and an entrance.

This awareness of each other becomes basics of many road safety and traffic efficiency applications. This can be performed by regular exchange of information between road users at vehicle to vehicle (V2V), vehicle to infrastructure (V21), infrastructure to vehicle (12V) or everything to everything (X2X) which are based on a wireless network called a V2X network.

On this other hand, the cooperative safety and traffic efficiency applications require the V2X communication device to develop situational awareness that includes the presence and behavior of road users around the V2X communication device. For example, the V2X communication device may develop situational awareness through communication with its own sensors and other V2X communication devices. In this case, the CA service may specify how the V2X communication device can inform its own position, dynamics and attributes by sending a Cooperative Awareness Message (CAM).

Thus, in regard to the CA service, the V2X communication device may periodically provide its own position and state to surrounding V2X communication devices, thereby supporting traffic safety. However, the CA service has a limitation in that only information of the corresponding V2X communication device itself can be shared. In order to overcome this limitation, it is necessary to develop services such as a collective perception (CP) service.

The CP service may specify how the V2X communication device can inform other V2X communication devices about the position, dynamics, and attributes of surrounding road users and other objects that are detected. For example, the CP service may share this information with other V2X communication devices through the transmission of Collective Perception Messages (CPM). This CP service may be an optional facility for all types of V2X communication devices (vehicle V2X communication device, road side V2X communication device, personal V2X communication device, etc.) participating in road traffic.

Hereinafter, a CPM transmitted by an V2X communication device participating in a V2X network and a CP service for transmitting the CPM will be described in detail with reference to FIG. 3. In this specification, the CPM may be a message exchanged between V2X communication devices via a V2X network, and may be used to generate collective perception for road users and other objects detected and/or recognized by the V2X communication device. In this case, the detected road user or object may be, but not limited to, a road user or an object which is not equipped with an V2X communication device.

As described above, the V2X communication device sharing information through the CAM shares only information about the state recognition of the V2X communication device itself with other V2X communication devices in order to generate cooperative awareness. In this case, since the road user or other objects unequipped with the V2X communication device are not a part of the system, a view about safety and traffic management related situations may be limited.

One method for improving this is that a system/device equipped with the V2X communication device and capable of recognizing road users and objects unequipped with the V2X communication device informs other V2X communication devices of the presence and state of these road users and objects unequipped with V2X device (or ITS-S). In order to easily improve the safety and traffic management performance, the CP service may recognize the cooperative awareness of the presence of the road user and the object unequipped with V2X device, and thereby may improve the safety and traffic management performance of the system equipped with the V2X communication device.

As shown in FIG. 3, the CP service may be a facilities layer entity that operates a CPM protocol. For example, the CP service may be a part of the application support domain of the facilities layer. FIG. 3 illustrates a logical interface for the CP service and other layers in the exemplary architecture of V2X communication device and a potential logical interface for entities in a facilities layer.

This CP service may provide two services, for example, sending and receiving of CPM. On the other hand, the CP service may be fundamentally different from the CA service in that the CP service cannot receive input data on a host V2X communication device, for example, from a VDP or POTI unit.

The sending of the CPM includes generation and transmission of the CPM. In the generation process of the CPM, the originating V2X communication device configures a CPM, and then the CPM is delivered to the networking and transport layer for dissemination. In this specification, the originating V2X communication device may be referred to as a sending V2X communication device, a transmitting V2X communication device, a host V2X communication device, and the like.

On the other hand, in order to collect relevant information for CPM generation and to deliver the received CPM content for additional processing, the CP service may interface with other entities in the facilities layer and V2X applications in the facilities layer. In an embodiment, at the V2X communication device, the entity for data collection may be a facility that provides object detection at a host object detector.

Also, in order to disseminate (or send) the CPM, the CP service may use services provided by protocol entities of the transport layer and the networking. For example, the CP service may interface with the network and the transport layer (N&T) through NF-SAP to exchange CPM messages with other V2X communication devices. Also, the CP service may interface with the secure entities through SF-SAP to access the security service for CPM dissemination and CPM reception, may interface with the management entities through MF-SAP, and may interface with the application layer through FA-SAP if the received CPM data are directly provided to the application.

The dissemination of the CPM may vary according to the applied communication system. For example, in the ITS-G5 network (defined in ETSI EN 302 663), the CPM may be transmitted to all V2X communication devices within the direct communication range by the originating V2X communication device. The communication range may be particularly affected by the originating V2X communication device by changing the transmission power according to a relevant region.

Also, the CPM may be periodically generated at a rate controlled by the CP service in the originating V2X communication device. The generation frequency may be determined in consideration of a radio channel load determined by the Decentralized Congestion Control (DCC), and may be determined in consideration of the state of the detected non-ITS object, for example, dynamic behavior of position, velocity or direction, and transmission of the CPM for the same (perceived) object by other V2X communication devices.

Also, when the receiving V2X communication device receives the CPM, the CP service enables the contents of the CP to be used in facilities inside the receiving V2X communication device, such as an ITS application and/or a Local Dynamic Map (LDM). For example, the Local Dynamic Map (LDM) may be updated with the received CPM data. The V2X application may retrieve this information from the LDM for additional processing.

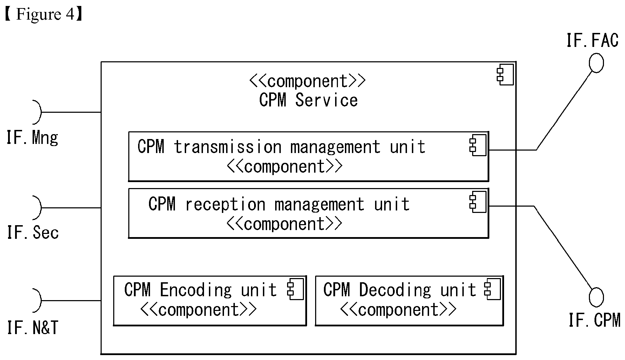

FIG. 4 is a view illustrating a function blocks of a CP service according to an embodiment of the present invention. Specifically, FIG. 4 illustrates functional blocks of the CP service according to an embodiment and functional blocks having interfaces for other facilities and layers.

As shown in FIG. 4, the CP service may provide the following subfunctions for CPM transmission and reception.

CPM encoding: This subfunction may configure or generate a CPM according to a predefined format. In this case, the latest in-vehicle data may be included in the CPM.

CPM decoding: This subfunction may decode the received CPM.

CPM transmission management: This subfunction may implement the protocol operation of the originating V2X communication device. In particular, this may include activation and termination of the CPM transmission operation, determination of the CPM generation frequency, and trigger of the CPM generation.

CP reception management: This subfunction may implement the protocol operation of the receiving V2X communication device. In particular, this may include trigger of "CPM decoding" function in the CPM reception, provision of the received CPM data to the LDM or the V2X application of the receiving V2X communication device, and checking of the information of the optionally received CPM.

Hereinafter, the CPM dissemination will be described in detail. Specifically, the requirements for CPM dissemination, CP service activation and termination, CPM trigger conditions, CPM generation cycle, and constraints are described.

In an embodiment, point-to-multipoint communication may be used for CPM transmission. For example, when ITS-G5 is used for CPM dissemination, a control channel (G5-CCH) may be used. In an embodiment, the CPM generation may be triggered and managed by the CP service while the CP service is being activated. For example, the CP service may be activated together with V2X communication device activation, and may be terminated when the V2X communication device is terminated.

In an embodiment, the host V2X communication device may send a CPM whenever at least one object having a sufficient level of confidence that needs to be exchanged with the surrounding V2X communication device is detected. In regard to the inclusion of the detected object, the CP service needs to consider a trade-off between the object age and the channel utilization. For example, in terms of an application using information received by the CPM, updated information needs to be provided as frequently as possible. However, in terms of the ITS-G5 stack, the channel utilization needs to be minimized, and thus a low transmission period is required. Accordingly, in consideration of this, the V2X communication device needs to appropriately include the detected object or object information in the CPM. On the other hand, in order to reduce the resulting message size, the object needs to be evaluated before transmission thereof.

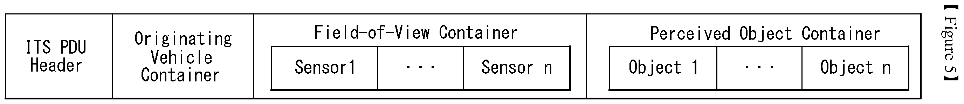

FIG. 5 is a view illustrating a CPM structure according to an embodiment of the present invention. In the embodiment of FIG. 5, the CPM structure may be a basic CPM structure. The CPM structure of FIG. 5 may be referred to as a first CPM structure or a first type CPM structure. The CPM having the CPM structure of FIG. 5 may be referred to as a basic CPM or a first type CPM.

As described above, the CPM may be a message exchanged between V2X communication devices in a V2X network, and may be used to generate collective perception for road users and/or other objects detected and/or recognized by the V2X communication device. That is, the CPM may be an V2X message for generating a collective perception for an object detected by the V2X communication device.

In an embodiment, the CPM may include state and attribute information of road users and objects detected by the originating V2X communication device. The content may vary according to the types of detected road users or objects and the detection performance of the originating V2X communication device. For example, in the case of a vehicle object, the state information may include at least information on the actual time, position, and motion state. Also, the attribute information may include attributes such as dimension, vehicle type, and role within road traffic.

This CPM may complement the CAM, and may act similarly to the CAM. That is, the CPM may be for increasing the cooperative awareness. The CPM may include externally observable information about the detected road user or object. On the other hand, the CP service may include a method of reducing replication or duplication of the CPMs sent by different V2X communication devices by checking the CPMs sent by the other stations.

Upon CPM reception, the receiving V2X communication device may recognize the presence, type and state of the road user or object detected by the originating V2X communication device. The received information may be used by the receiving V2X communication device to support ITS applications for increasing safety and improving traffic efficiency and travel time. For example, by comparing the received information with the state of the detected road user or object, the receiving V2X communication device may estimate the risk of collision with the road user or object. Also, the receiving V2X communication device may inform a user through a Human-Machine Interface (HMI) of the receiving V2X communication device, or may automatically take corrective actions.

Hereinafter, the basic structure/format of the CPM will be described with reference to FIG. 5. This CPM format may be presented or encoding/decoding as ASN.1. Also, Data Element (DE) and Data Frame (DF), which are not defined herein, may be derived from the common data dictionary, for example, specified in ETSI TS 102 894-2.

Referring to FIG. 5, the CPM may include an ITS Protocol Data Unit (PDU) header and a plurality of containers.

The ITS PDU header is a common header including information on the protocol version, the message type, and the ITS ID of the originating V2X communication device. This ITS PDU is a common header used in the V2X message/ITS message, and exists at the starting part of the V2X message. ITS PDU header may be referred to common header, header, header part, etc.

The plurality of containers may include an Originating Vehicle Container (OVC), a Perceived (or detected) Object Container (POC), and/or a Field-of-View Container (FVC or FoVC). For example, the CPM may include an OVC as a mandatory container, and may optionally include an FVC and a POC. Hereinafter, each container will be described with reference to Tables 1 to 3.

**Table 1 shows an exemplary OVC in the CPM.**

| **DE** | **TS 102 894-2 [2] CDD reference** |
|---|---|
| Generation Delta Time | See CAM ETSI EN 302 637-2 [3] |
| Reference Position | A.124 |
| Heading | A.112 |
| Longitudinal Speed | A.126 |
| Lateral Speed | A.126 |
| Vehicle Length | A.131 |
| Vehicle Width | A.95 |

Specifically, Table 1 shows the Data Elements (DE) and/or Data Frames (DF) included in the exemplary OVC. Here, the DE is a data type that includes single data. The DF is a data type that includes one or more elements in a predefined order. For example, the DF may be a data type that includes one or more DEs and/or one or more DFs in a predefined order.

The DE/DF may be used to configure a facility layer message or an application layer message. Examples of the facility layer messages may include CAM, CPM, DENM, and the like. In this specification, these messages may be referred to as V2X messages or ITS message.

As shown in Table 1, the OVC include basic information related to the V2X communication device that disseminates the CPM. The OVC may be interpreted as a scale-down version of the CAM, but may include only the DE required for a coordination transformation process. That is, although similar to the CAM, the OVC provides basic information about the originating V2X communication device. However, the included information is focused on supporting of the coordinate transformation process.

The OVC may provide the followings.
- The latest geographic position of the originating V2X communication device obtained by the CP service at the time of CPM generation.
- The lateral and longitudinal absolute velocity components of the originating V2X communication device.
- Geometric dimensions of the originating V2X communication device.

Hereinafter, each information (DE or DF) will be described with reference to Table 1.

Generation delta time (or Generation time): as DE, indicates a time corresponding to the time of the reference position in the CPM. This may be considered as the time of CPM generation. In this specification, the generation delta time may also be referred to as a generation time.

Reference position: as DF, indicates the geographic position of the V2X communication device. This indicates a geographic point position. In an embodiment, the reference position may include information about latitude, longitude, position reliability and/or altitude. Here, the latitude represents the latitude of the geographic point, and the longitude represents the longitude of the geographic point. Also, the position confidence represents the accuracy of the geographic position, and the altitude represents the altitude and altitude accuracy of the geographic point.

Direction: as DF, indicates the direction in the coordinate system. In an embodiment, the direction includes information about direction values and/or direction reliability/confidence. Here, the direction value indicates the traveling direction based on the north, and the direction confidence indicates the accuracy of the reported direction value having a predefined confidence level.

Longitudinal velocity: as DF, longitudinal velocity and the accuracy of velocity information with respect to a moving object (e.g., a vehicle) may be described. In an embodiment, the longitudinal velocity includes information on velocity values and/or velocity accuracy. Here, the velocity value indicates the velocity value in the longitudinal direction, and the velocity accuracy indicates the accuracy of the reported velocity value.

Lateral velocity: as DF, lateral velocity and the accuracy of velocity information with respect to a moving object (e.g., a vehicle) may be described. In an embodiment, the lateral velocity includes information on velocity values and/or velocity accuracy. Here, the velocity value indicates the velocity value in the lateral direction, and the velocity accuracy indicates the accuracy of the reported velocity value.

Vehicle length: as DF, indicates vehicle length and accuracy indication. In an embodiment, the vehicle length includes information about a vehicle length value and/or a vehicle length accuracy indication. Here, the vehicle length indicates the length of the vehicle, and the vehicle length accuracy indication indicates an indication of the reported length value confidence.

Vehicle width: as DE, indicates the width of the vehicle. For example, the vehicle width may indicate the width of the vehicle, including the side mirrors. For example, when the vehicle width is equal to or greater than about 6.1 meters, the value needs to be set to 61. When this information is not available, the value needs to be set to 62.

**Table 2 shows an exemplary FVC in the CPM.**

| DE | | SI-Unit | Description |
|---|---|---|---|
| Sensor ID | | - | Unique ID of sensor which is used to identify by which sensor an object has been perceived. The ID is a random number generated when the V2X device is activated and never changes until the V2X device is deactivated. |
| Sensor Type | | - | Enumeration of sensor types: undefined (0), radar (1), lidar (2), monovideo (3), stereovision (4), nightvision (5), ultrasonic (6), fusedObject (7), pmd(8) |
| Sensor Position | | | |
| | Position X | m | Mounting position of the sensor in negative x-direction according to the ISO 8855 [i.15] reference frame, measured from the ETSI reference position (see Clause B.19 in EN 302 637-2 [3]) |
| | Position Y | m | Mounting position of the sensor in y-direction according to the ISO 8855 [i.15] reference frame, measured from the ETSI reference position (see Clause B.19 in EN 302 637-2 [3]) |
| Radius | | m | Average perception range of the sensor as defined by the manufacturer |
| Opening Angle | | | |
| | Begin Angle | deg | Start angle of the sensor frustum in ISO 8855 [i.15] coordinate system |
| | End Angle | deg | End angle of the sensor frustum in ISO 8855 [i.15] coordinate system |
| Quality Class | | - | Classification of sensor defining the quality of measured objects |

The FVC provides a description/information of at least one sensor mounted onto the originating V2X communication device. When the V2X communication device is equipped with multiple sensors, the description may be added several times. For example, the FVC provides information about the sensor capabilities of the originating V2X communication device. To this end, the generic sensor characteristics which provide the mounting position of a sensor on the disseminating V2X communication device as well as the type of sensor and the range and opening angle of the sensor (i.e., the frustum of the sensor) may be included as a part of the message. This information may be used by the receiving V2X communication device to select an appropriate prediction model according to the performance of the sensor.

Hereinafter, each information (DE or DF) will be described with reference to Table 2.

Sensor ID: This indicates a unique ID of a sensor used to identify the sensor where an object is perceived (or detected). For example, the sensor ID indicates the unique ID of the sensor that detects the object. In an embodiment, the sensor ID may be a random number generated when the V2X communication device is activated, and may not be changed until the V2X communication device is deactivated.

Sensor type: This indicates the type of sensor. That is, the sensor type is enumerated. For example, the sensor type may be undefined (0), radar (1), lidar (2), monovideo (3), stereovision (4), nightvision (5), ultrasonic (6), fusedObject (7) or pmd (8).

Sensor position: Position X indicates the mounting position of the sensor in the negative x-direction, and position Y indicates the mounting position of the sensor in the y-direction.

Radius: This indicates the average recognition range of a sensor as defined by a manufacturer.

Opening angle and End angle: The opening angle indicates the start angle of the sensor frustum, and the end angle indicates the end angle of the sensor frustum.

Quality Class: This indicates classification of the sensors that define the quality of the measured objects.

**Table 3 shows an exemplary POC in the CPM.**

| DE | | **TS 102 894-2 [2] CDD reference** | Mandatory | Description |
|---|---|---|---|---|
| Time of Measurement | | | Yes | Time in micro-seconds from the message reference time. Defines the relative age of the measured object. |
| Object ID | | | Yes | Unique random ID assigned to object. This ID is maintained (i.e. does not change) as long as the object is tracked (i.e. considered by the disseminating ITS-S's data fusion processes). |
| Sensor ID | | | Yes | Corresponds to the Sensor ID DE in Table 4. This DE is used to relate the object information to the sensor providing the measurement. |
| Longitudinal Distance | | | Yes | |
| | Distance Value | | Yes | Relative x-distance to object in originator reference frame ISO 8855 [i.15] |
| | Distance Confidence | | Yes | Confidence of relative x-distance to object in originator reference frame ISO 8855 [i.15] |
| Lateral Distance | | | Yes | |
| | Distance Value | | Yes | Relative y-distance to object in originator reference frame ISO 8855 [i.15] |
| | Distance Confidence | | Yes | Confidence of relative y-distance to object in originator reference frame ISO 8855 [i.15] |
| Longitudinal Speed | | A.126 | Yes | Longitudinal speed of detected object along with confidence as described in CDD |
| Lateral Speed | | A.126 | Yes | Lateral speed of detected object along with confidence as described in CDD |
| Object Heading | | A.112 | No | Absolute orientation of object in WGS84 reference frame, if provided by data fusion process |
| Object Length | | | No | |
| | Length Value | | No | Measured length of the object |
| | Length Confidence | | No | Confidence of measured length of the object |
| Object Width | | | No | |
| | Width Value | | No | Measured width of the object |
| | Width Confidence | | No | Confidence of measured width of the object |
| Object Type | | A.78 | No | Classification of object, if provided by data fusion process |

The POC is used to describe the object perceived by the sensor in terms of the transmitting V2X communication device. Upon POC reception, the receiving V2X communication device may perform the coordinate transformation process with the help of the OVC to convert the position of the object into the reference frame of the receiving vehicle. In order to reduce the message size, several optional DEs may be provided, which may be used when the originating V2X communication device may provide this DE.

The POC may be configured with selection of DEs to provide an abstract description of the perceived (or detected) object. For example, relative distance and velocity information and timing information about the perceived (or detected) object related to the originating V2X communication device may be included in the POC as a mandatory DE. In addition, when the sensor of the originating V2X communication device can provide the requested data, additional optional DEs may be provided.

Hereinafter, each information (DE or DF) will be described with reference to Table 3.

Measurement time: This indicates a time of microsecond unit from the message reference time. This may define the relative lifetime of the measured object.

Object ID: This indicates a unique random ID assigned to an object. This ID is maintained (i.e., is not changed) as long as the object tracks (i.e., as long as being considered by a data fusion process of the disseminating V2X communication device).

Sensor ID: This is an ID corresponding to the sensor ID DE in Table 2. This DE may be used to correlate object information with a sensor that provides measurement.

Longitudinal distance and Distance confidence for longitudinal distance: The distance value indicates a relative distance x to the object in the originator reference frame, and the distance confidence indicates the confidence of a relative distance x to the object in the originator reference frame.

Lateral distance and Distance confidence for lateral distance: The distance value indicates a relative distance x to the object in the originator reference frame, and the distance confidence indicates the confidence of a relative distance x to the object in the originator reference frame.

Longitudinal speed: This indicates the longitudinal velocity of the detected object according to the confidence.

Lateral speed: This indicates the lateral velocity of the detected object according to the confidence.

Object direction: When provided by the data fusion process, in the reference frame, this indicates the absolute direction of the object.

Object length and Length confidence for object length: The length value indicates the measured length of the object, and the length confidence indicates the confidence of the measured length of the object.

Object width and Width confidence for object width: The width value indicates the measured width of the object, and the width confidence indicates the confidence of the measured width of the object.

Object type: This indicates the classification of the object, when provided by the data fusion process.

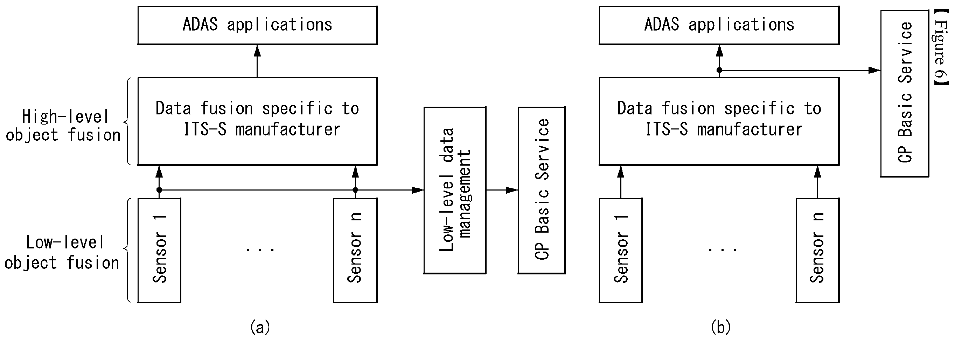

FIG. 6 is a view illustrating a method of extracting sensor data by a V2X communication device providing a CP service according to an exemplary embodiment of the present invention. Specifically, FIG. 6A shows how the V2X communication device extracts sensor data at a low level, and FIG. 6B shows how the V2X communication device extracts sensor data at a high level.

The source of the sensor data to be transmitted as a part of any CPM need to be selected according to the requirements of the prospective data fusion process on the receiving V2X communication device. Generally, the transmitted data need to be as close as possible to the original sensor data. However, simple transmitting of the original sensor data, for example, raw data is not a viable solution. This is because the transmitting of the original sensor data imposes very high requirements in regard to the data rate and transmission period. FIGS. 6A and 6B show possible implementations for selecting data to be transmitted as a part of the CPM.

In the embodiment of FIG. 6A, sensor data are obtained from different sensors, and are processed as a part of a low-level data management entity. This entity may not only select the object data to be inserted as a part of the next CPM, but also calculate the plausibility of the detected object. In the case of FIG. 6A, since the data of each sensor are transmitted, the amount of data transmitted through the V2X network is increased, but the sensor information may be efficiently used at the receiving V2X communication device.

In the embodiment of FIG. 6B, the sensor data or the object data provided by the data fusion process specific to a V2X communication device manufacturer are transmitted as a part of the CPM. In the case of FIG. 6B, since the integrated sensor data collected into one through the data fusion block are transmitted, there is an advantage in that the amount of data transmitted through the V2X network is small. However, there is a disadvantage of being dependent on the collection method of the V2X communication device collecting the sensor information. In this case, since different data fusion processes can be implemented by different manufacturers, this implementation method is not generally preferred to FIG. 6A.

On the other hand, regardless of the implementation type, whenever the object is detected by the sensor of the V2X communication device, the plausibility thereof needs to be calculated. When the plausibility of the object exceeds a given threshold PLAUS_OBJ, the transmission needs to be considered. For example, when an absolute difference between the current yaw-angle of the detected object and the yaw angle included in the CPM previously transmitted by the originating V2X communication device exceeds about 4 degrees, when a relative distance between the current positions of the originating V2X communication device and the detected object and a relative position difference between the originating V2X communication device and the detected object included in the CPM previously transmitted by the originating V2X communication device exceeds about 4 meters, or when an absolute difference between the current velocity of the detected object and the velocity included in the CPM previously transmitted by the originating object exceeds about 0.5 m/s, the transmission may be considered.

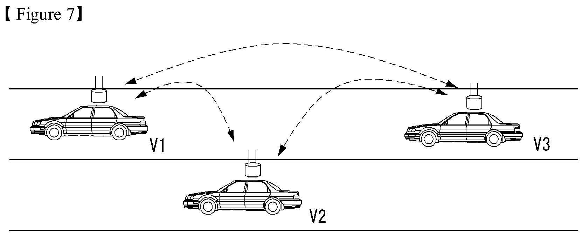

FIG. 7 is a view illustrating a method by which a V2X communication device communicates with another V2X communication device according to an embodiment of the present invention.

In the embodiment of FIG. 7, it is assumed that each vehicle or vehicle V2X communication device is located within a communication radius/range. For example, as shown in the drawing, the first vehicle V2X communication device of the first vehicle V1, the second vehicle V2X communication device of the second vehicle V2, and the third vehicle V2X communication device of the third vehicle V3 may be all located within the communication radiuses/ranges of each vehicle V2X communication device. Accordingly, each V2X communication device may transmit a V2X message to other V2X communication devices, or may receive a V2X message from other V2X communication devices. Here, the V2X message may be a CAM or a CPM.

On the other hand, for convenience of explanation in the following embodiments, the vehicle V2X communication device and the vehicle may be equated with each other. For example, the operation by the vehicle V2X communication device may be equated with the operation by the vehicle.

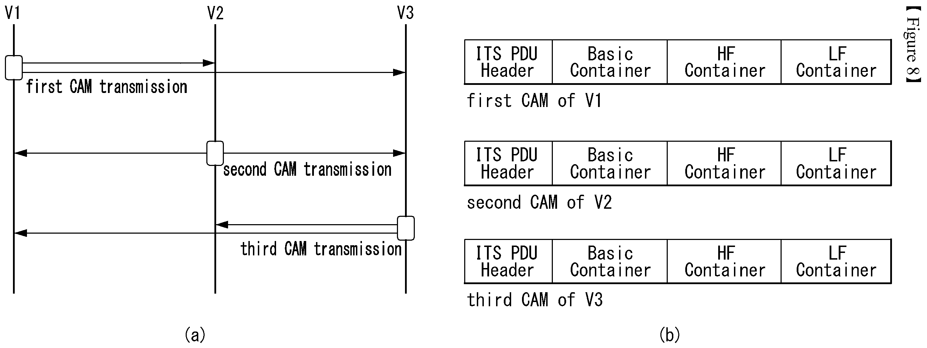

FIG. 8 is a view illustrating a method by which a V2X communication device communicates with another V2X communication device using CAM according to an embodiment of the present invention. FIG. 8A shows a procedure of transmitting a CAM by a V2X communication device according to an embodiment of the present invention, and FIG. 8B shows a structure of the CAM transmitted through the transmission procedure of FIG. 8A. In the embodiment of FIG. 8, it is assumed that the V2X communication device is the V2X communication device of FIG. 7. On the other hand, the structure of the CAM message conforms to the related standards (e.g., ETSI EN 302 637-2, etc.) that define the structure of the CAM message.

In an embodiment, the CAM may include an ITS PDU header and at least one container. In this case, the at least one container may include a basic container and/or a vehicle V2X device container. The ITS PDU header may be as described in FIG. 5, and the basic container may provide basic information of the originating V2X communication device. For example, the basic container may include the type of originating V2X communication device and/or the latest geographic position of the originating V2X communication device.

In an embodiment, the vehicle V2X device container may include a high frequency (HF) vehicle container (HF container) and/or a low frequency (LF) vehicle container (LF container). The HF container may include fast-changing (or dynamic) state information of the vehicle V2X communication device, such as direction or velocity. Also, the LF container may include static or slow-changing vehicle data, such as the state of exterior lights.

Referring to FIG. 8A, the first vehicle V2X communication device may transmit or broadcast the first CAM, and the second vehicle V2X communication device and the third vehicle V2X communication device may receive the first CAM. The structure of the CAM that is transmitted is as shown in the upper part of FIG. 8B. The first CAM may include the position and state information of the first vehicle. That is, the first CAM may provide basic information of the first vehicle or the first vehicle V2X communication device.

Also, the second vehicle V2X communication device may transmit or broadcast the second CAM, and the first vehicle V2X communication device and the third vehicle V2X communication device may receive the second CAM. The structure of the CAM that is transmitted is as shown in the central part of FIG. 8B. The second CAM may include the position and state information of the second vehicle. That is, the second CAM may provide basic information of the second vehicle or the second vehicle V2X communication device.

Also, the third vehicle V2X communication device may transmit or broadcast the third CAM, and the first vehicle V2X communication device and the second vehicle V2X communication device may receive the third CAM. The structure of the CAM that is transmitted is as shown in the lower part of FIG. 8B. The third CAM may include the position and state information of the third vehicle. That is, the third CAM may provide basic information of the third vehicle or the third vehicle V2X communication device.

By the transmission and reception of the CAM, each vehicle may know the position and state of the surrounding vehicle, and may use the position and state for vehicle safety, traffic efficiency, and the like. However, in the case of the CAM, since only the basic information (e.g. position and state information) about the vehicle itself may be provided to other vehicles, the other vehicles may not acquire information about V2X device-unequipped objects around the vehicle that transmits the V2X message. Accordingly, limited vehicle safety and traffic efficiency services are provided to a user.

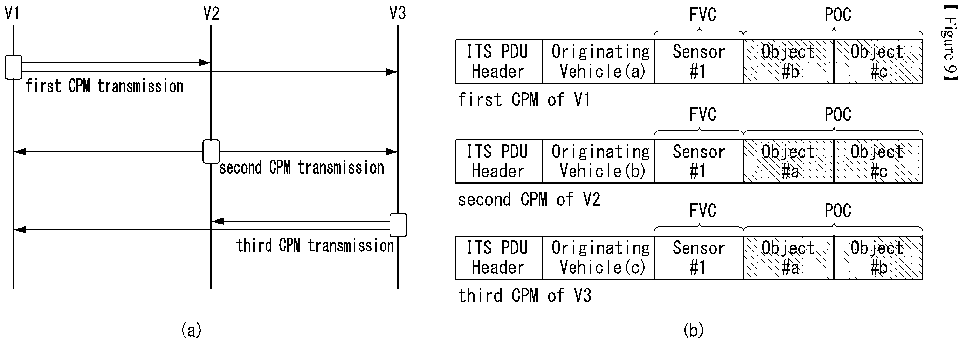

FIG. 9 is a view illustrating a method by which a V2X communication device communicates with another V2X communication device using CPM according to an embodiment of the present invention. In the embodiment of FIG. 9, it is assumed that the structure of the CPM follows the structure of FIG. 5.

FIG. 9A shows a procedure of transmitting a CPM by a V2X communication device according to an embodiment of the present invention, and FIG. 9B shows a structure of the CPM transmitted through the transmission procedure of FIG. 9A. In the embodiment of FIG. 9, it is assumed that the V2X communication device is the V2X communication device of FIG. 7. Also, in the embodiment of FIG. 9, it is assumed that each vehicle includes at least one sensor, and may detect surrounding objects using the at least one sensor.

Referring to FIG. 9A, the first vehicle V2X communication device may transmit or broadcast the first CPM, and the second vehicle V2X communication device and the third vehicle V2X communication device may receive the first CPM.

The structure of the first CPM that is transmitted is as shown in the upper part of FIG. 9B. The first CPM may includes basic information (e.g., position and state information) of the first vehicle, and may include object information about the second vehicle and the third vehicle which are the objects detected by the sensor of the first vehicle. In this case, the basic information of the first vehicle may be included in the OVC of the first CPM, and the object information about the second vehicle and the third vehicle may be included in the POC of the first CPM. Accordingly, the second vehicle and the third vehicle may obtain not only the information of the first vehicle through the received first CPM, but also their own information obtained by the first vehicle and the information of other vehicles.

Also, the second vehicle V2X communication device may transmit or broadcast the second CPM, and the first vehicle V2X communication device and the third vehicle V2X communication device may receive the second CPM. The structure of the second CPM that is transmitted is as shown in the central part of FIG. 9B. The second CPM may includes basic information (e.g., position and state information) of the second vehicle, and may include object information about the first vehicle and the third vehicle which are the objects detected by the sensor of the second vehicle. In this case, the basic information of the second vehicle may be included in the OVC of the second CPM, and the object information about the first vehicle and the third vehicle may be included in the POC of the second CPM. Accordingly, the first vehicle and the third vehicle may obtain not only the information of the second vehicle through the received second CPM, but also their own information obtained by the second vehicle and the information of other vehicles.

Also, the third vehicle V2X communication device may transmit or broadcast the third CPM, and the first vehicle V2X communication device and the second vehicle V2X communication device may receive the third CPM. The structure of the third CPM that is transmitted is as shown in the lower part of FIG. 9B. The third CPM may includes basic information (e.g., position and state information) of the third vehicle, and may include object information about the first vehicle and the second vehicle which are the objects detected by the sensor of the third vehicle. In this case, the basic information of the third vehicle may be included in the OVC of the third CPM, and the object information about the first vehicle and the second vehicle may be included in the POC of the third CPM. Accordingly, the first vehicle and the second vehicle may obtain not only the information of the third vehicle through the received third CPM, but also their own information obtained by the third vehicle and the information of other vehicles.

By the transmission and reception of the CPM, each vehicle may know the position and state of the surrounding vehicle, and may know the position and state of a vehicle detected by the surrounding vehicle, thereby using the position and state for vehicle safety, traffic efficiency, and the like. Thus, unlike the CAM, it is possible to obtain information about a V2X device-unequipped object around the vehicle that transmits the V2X message. Accordingly, more accurate vehicle safety and traffic efficiency services can be provided to a user.

However, the object detected by the vehicle (originating vehicle) that transmits the CPM may be the same object as the vehicle (receiving vehicle) receiving the CPM. In this case, if the receiving vehicle is also a vehicle generating and transmitting the CPM, this results in duplicate transmission of basic information about its own vehicle together with another vehicle (e.g., originating vehicle).

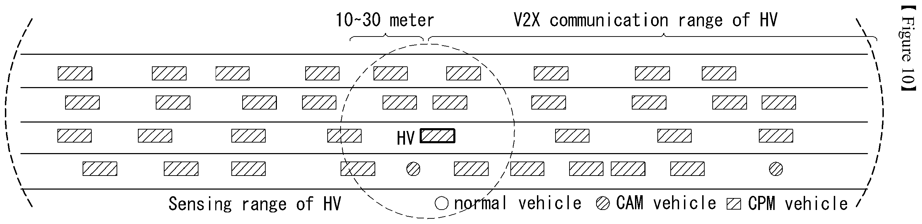

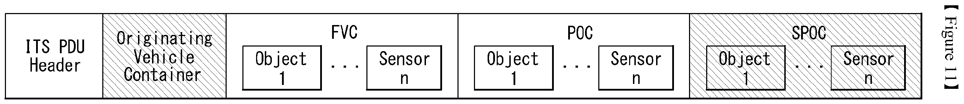

As shown in the embodiment of FIG. 9, when the number of vehicles exchanging CPMs is small, the transmission of duplicate information through the CPMs may not matter significantly. However, like urban congested areas, when there are a large number of vehicles exchanging CPMs, the number of objects to which duplicate information is transmitted may increase. This may result in an increase in the amount of information transmitted through limited channels, causing the communication environment to be very bad. Hereinafter, limitations caused by CPM transmission in the same manner as in the embodiment of FIG. 9 under a congested environment will be described with reference to FIGS. 10 and 11.

FIG. 10 is a view illustrating a method of transmitting a CPM by a V2X communication device in a congested environment according to an embodiment of the present invention. In the embodiment of FIG. 10, the congested environment may be, for example, an environment where traffic congestion occurs in a congested area of a downtown area. In this case, there may be a large number of vehicles in each lane, and each vehicle may be located, for example, within 10 meters of each other. In this case, each vehicle may detect an average of about 8 vehicles through sensors of the vehicle.

If N vehicles within a communication range transmit CAMs, the basic information of the vehicles may be transmitted N times. This is because each vehicle transmits only basic information about itself through the CAMs.

However, if N vehicles within a communication range transmit CPMs, the basic information of the vehicle is transmitted much more than N times. This is because each vehicle transmits not only basic information about itself through the CPMs, but also information about the surrounding vehicles detected by the sensors of the vehicle.

As in the congestion situation of FIG. 10, when the number of vehicles within the communication range is very large, the number of surrounding vehicles detected by each vehicle is greatly increased. In this case, when the CPM transmission method as shown in FIG. 9 using the CPM structure of FIG. 5 is used, the size of the CPM generated by the originating vehicle (e.g., HV1) becomes very large. Also, the amount of vehicle information to be transmitted redundantly is increased. Accordingly, the amount of information transmitted through limited channels increases, causing the communication environment to be bad. Thus, the V2X communication device needs to provide a new CPM generation method and a new form of CPM structure to provide an efficient CP service.

FIG. 11 is a view illustrating a CPM structure according to an embodiment of the present invention. In the embodiment of FIG. 11, the CPM structure may be an improved or modified CPM structure. The CPM structure of FIG. 11 may be referred to as a second CPM structure or a second type CPM structure. The CPM having the CPM structure of FIG. 11 may be referred to as a modified CPM and a second type CPM. On the other hand, in this specification, the basic CPM and the modified CPM may be collectively referred to as CPM.

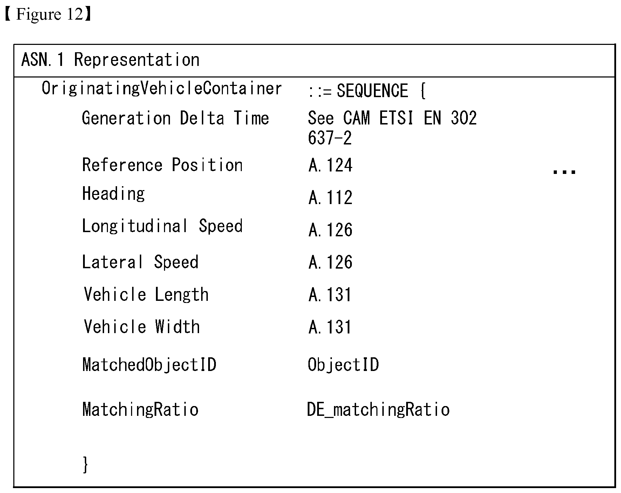

The modified CPM may include an ITS PDU header and at least one container. The at least one container may include OVC, FVC, POC, and/or short POC (SPOC). In an embodiment, the modified CPM may include SPOC in addition to POC, or may include SPOC instead of POC. Since the ITS PDU header, FVC and POC are the same as described above, modified OVC and SPOC will be described below with reference to FIGS. 12 to 14.

FIG. 12 is a view illustrating an OVC in the CPM of FIG. 11.

As shown in FIG. 12, the OVC in the CPM of FIG. 11 may include generation time information (or generation delta time information), reference position information, direction information (or heading information), longitudinal speed information, lateral speed information, vehicle length information, vehicle width information, matched object ID information, and/or matching ratio information. Thus, the OVC in the CPM of FIG. 11 may further include the matched object ID information and the matching ratio information, unlike the OVC in the CPM of FIG. 5. Since the generation time information, etc. have been described with reference to FIG. 5, hereinafter, the matched object ID information and the matching ratio information which are newly added will be described.

Matched object ID information: The matched object ID information may indicate the ID of an object (matched object) determined to be identical to or matched with the originating object among the receiving detection object within the reception CPM. This matched object ID information may be used to identify a matched object. Here, the receiving detection object is an object detected by the object (or V2X communication device) that transmits the reception CPM. As described above, information about this detection object may be included in the POC in the reception CPM. The originating object is an object equipped with the originating V2X communication device that receives a reception CPM and generates and transmits a CPM. Thus, the originating V2X communication device may inform a surrounding V2X communication device that the corresponding detection object is an object matching with itself. In an embodiment, the originating V2X communication device may determine, as a matched object, an object with the highest probability of matching with the originating object among the receiving detection objects within the received CPM.

Matching ratio information (or Matching confidence information): The matching ratio information is DE, and may indicate the probability that the matched object identified by the matched object ID information and the originating object are identical to or matched with each other. Thus, the originating V2X communication device may provide the surrounding V2X communication device with the confidence information about the matched object in addition to the ID information of the matched object. Accordingly, the receiving V2X communication device may obtain the confidence information about the matched object based on the matching ratio information in the received CPM. Thus, the receiving V2X communication device may determine whether to recognize the matched object as the object identical to the originating object according to its own confidence criterion.

In this specification, the matching ratio information may also be referred to as matching confidence information. Also, the matching ratio information in the OVC may also be referred to as first matching ratio information, matched object ratio information, or matched object confidence information in order to distinguish the matching ratio information in the OVC from the matching ratio information in the SPOC described later.

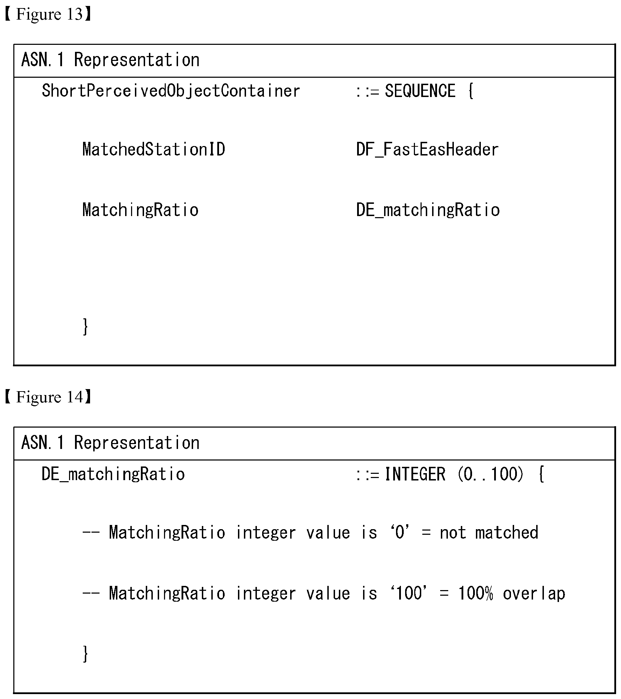

FIG. 13 is a view illustrating a SPOC in the CPM of FIG. 11.

As shown in FIG. 13, the SPOC may include short or summary object information about at least one originating detection object. Here, the originating detection object is an object detected by an originating object (or originating V2X communication device). In an embodiment, short object information may include matching station ID information and/or matching ratio information.

Matching Station ID Information: The matching station ID information may indicate the ID of the V2X communication device (matching V2X communication device/matching ITS station) of the object determined to be identical to or matched with the originating detection object among the objects of the V2X communication devices that transmits the received V2X messages. This matching station ID information may be used to identify the matching V2X communication device.

In an embodiment, the received V2X message may be a CAM or a CPM. Thus, the originating V2X communication device may inform a surrounding V2X communication device that the object of the corresponding matching V2X communication device is an object that matches with the object detected by itself. In an embodiment, the originating V2X communication device may determine the V2X communication device of the object with the highest probability of matching with the originating detection object among the objects of the V2X communication devices that transmits the received V2X messages as the matching V2X communication device.

Matching ratio information (or Matching confidence information): The matching ratio information is DE, and may indicate the probability that the object of the V2X communication device identified by the matching station ID information and the originating detection object are identical to or matched with each other. Thus, the originating V2X communication device may provide the surrounding V2X communication device with the confidence information about the matching station in addition to the ID information of the matching station. Accordingly, the receiving V2X communication device may obtain the confidence information about the matching station based on the matching ratio information in the modified CPM that is received. Thus, the receiving V2X communication device may determine whether to recognize the matching station as the station identical to the originating station according to its own confidence criterion.

In this specification, the matching ratio information may also be referred to as matching confidence information. Also, in order to distinguish from the matching ratio information in the OVC, the matching ratio information in the SPOC may be referred to as second matching ratio information, matching station ratio information, or matching station confidence information.

FIG. 14 is a view illustrating matching ratio information of FIG. 12 or FIG. 13.

The embodiment of FIG. 14 indicates an ASN.1 representation of the matching ratio information of FIG. 12 or FIG. 13.

Referring to FIG. 14, the matching ratio information may be represented by DE_matchingRatio that is a data element, which may be displayed using an ASN.1 scheme. In an embodiment, the matching ratio information or the DE_matchingRatio may be expressed as an integer value having a value from 0 to 100, and the unit of the value may be a percentage representing a matching ratio.

For example, when the matching ratio information has a minimum value of 0, the matching ratio information may indicate that the matching ratio is 0%. This may indicate that two objects to be compared do not match or overlap each other at all. Also, when the matching ratio information has a maximum value of 100, the matching ratio information may indicate that the matching ratio is 100%. This may indicate that two objects to be compared completely match or overlap each other.

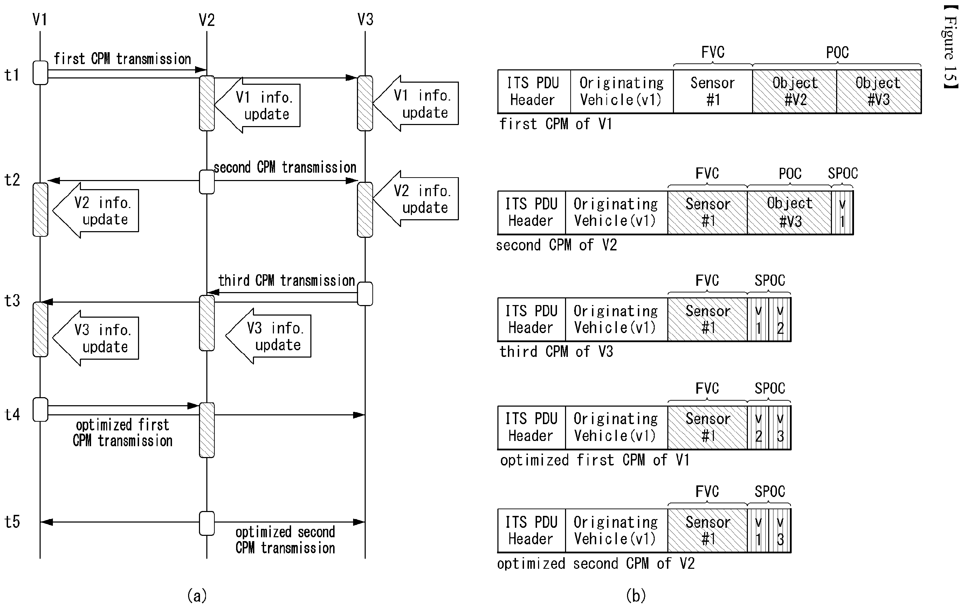

FIG. 15 is a view illustrating a method by which a V2X communication device communicates with another V2X communication device using CPM according to an embodiment of the present invention. In the embodiment of FIG. 15, it is assumed that the structure of the CPM follows the structure of FIG. 11.

FIG. 15A shows a procedure of transmitting a CPM by an V2X communication device according to another embodiment of the present invention, and FIG. 15B shows a structure of the CAM transmitted through the transmission procedure of FIG. 15A. In the embodiment of FIG. 15, it is assumed that the V2X communication device is the V2X communication device of FIG. 7. Also, in the embodiment of FIG. 15, it is assumed that each vehicle includes at least one sensor, and may detect surrounding objects using the at least one sensor.

Referring to t1 of FIG. 15A, the first vehicle V2X communication device may transmit or broadcast the first CPM, and the second vehicle V2X communication device and the third vehicle V2X communication device may receive the first CPM.

The structure of the first CPM that is transmitted is as shown in the upper part of FIG. 15B. As shown in the drawing, the first CPM may include an ITS PDU header, OVC, FVC, and/or POC. In this case, the OVC may include basic information of the first vehicle transmitting the first CPM, and the POC may include state information about the second vehicle and the third vehicle which are the objects detected by the first vehicle. The second vehicle and the third vehicle may obtain the information of the first vehicle through the received first CPM, and may obtain their own information obtained by the first vehicle and the information of other vehicles. Thus, the second vehicle and the third vehicle may update the information of the first vehicle.

Referring to t2 of FIG. 15A, the second vehicle V2X communication device may transmit or broadcast the second CPM, and the first vehicle V2X communication device and the third vehicle V2X communication device may receive the second CPM. In this case, the second vehicle V2X communication device may generate a second CPM to be transmitted based on the first CPM received from the first vehicle V2X communication device.

For example, the second vehicle V2X communication device may determine whether or not any one of the receiving detection objects in the first CPM is the same as the second vehicle, and when one of the receiving detection objects in the first CPM is the same as the second vehicle, may set the ID of the same receiving detection object to the matching object ID. In this case, the OVC of the second CPM may further include a matching object ID. As another example, the second vehicle V2X communication device may determine whether the first vehicle that transmits the first CPM is the same as any one of the originating detection objects, and if so, may set the station ID of the first vehicle to the matching station ID. In this case, the SPOC of the second CPM may further include a matching station ID.

The structure of the second CPM that is transmitted is as shown in the upper second part of FIG. 15B. As shown in the drawing, the first CPM may include an ITS PDU header, OVC, FVC, POC and/or SPOC.

In this case, the OVC may include basic information of the second vehicle transmitting the second CPM. Also, the OVC may further include matching object ID information and/or matching object ratio information. Thus, the first vehicle and the third vehicle may confirm that the second vehicle transmitting the second CPM is one of the objects detected by the first vehicle, as well as the basic information of the second vehicle that transmits the second CPM. In this case, the second vehicle that is the matching object may be identified by the matched object ID information.

Also, the POC may include state information about the third vehicle that is an object detected by the second vehicle. Thus, the first vehicle and the third vehicle may obtain the state information of the third vehicle detected by the second vehicle.

Also, the SPOC may include matching station ID information and/or matching station ratio information. Thus, the first vehicle and the third vehicle may confirm that one of the objects detected by the second vehicle is the first vehicle that transmits the first CPM. In this case, the first V2X communication device of the first vehicle, which is the matching station, may be identified by the station ID information.

Thus, through the transmission of the second CPM including the OVC including the information of the matched object and the SPO including the information of the matching station, the first vehicle and the third vehicle may not allow duplicate information to be included when CPM is generated later. Thus, the size of the CPM can be reduced.

Referring to t3 of FIG. 15A, the third vehicle V2X communication device may transmit or broadcast the third CPM, and the first vehicle V2X communication device and the second vehicle V2X communication device may receive the third CPM. In this case, the third vehicle V2X communication device may generate a third CPM to be transmitted based on the first CPM received from the first vehicle V2X communication device and the second CPM received from the second vehicle V2X communication device.

For example, the third vehicle V2X communication device may determine whether or not any one of the receiving detection objects in the first CPM is the same as the third vehicle, and if so, may set the ID of the same receiving detection object to the matching object ID. Alternatively, the third vehicle V2X communication device may determine whether or not any one of the receiving detection objects in the second CPM is the same as the third vehicle, and if so, may set the ID of the same receiving detection object to the matching object ID. In this case, the OVC of the second CPM may further include a matching object ID.

As another example, the third vehicle V2X communication device may determine whether the first vehicle that transmits the first CPM is the same as any one of the originating detection objects, and if so, may set the station ID of the first vehicle to the matching station ID. Alternatively, the third vehicle V2X communication device may determine whether the second vehicle that transmits the second CPM is the same as any one of the originating detection objects, and if so, may set the station ID of the second vehicle to the matching station ID. In this case, the SPOC of the second CPM may further include the matching station ID of the first vehicle and the matching station ID of the second vehicle.

The structure of the third CPM that is transmitted is as shown in the central part of FIG. 15B. As shown in the drawing, the third CPM may include an ITS PDU header, OVC, FVC, and/or SPOC. Since all the origination detection objects correspond to the objects that transmit the CPMs, the third CPM may not include the POC.

In this case, the OVC may include basic information of the third vehicle transmitting the third CPM. Also, the OVC may further include matching object ID information and/or matching object ratio information. Thus, the first vehicle and the second vehicle may confirm that the third vehicle transmitting the third CPM is one of the objects detected by the first vehicle or the second vehicle, as well as the basic information of the third vehicle that transmits the third CPM. In this case, the third vehicle that is the matching object may be identified by the matched object ID information.

Also, the SPOC may include matching station ID information and/or matching station ratio information of the first vehicle and second vehicle. Thus, the first vehicle and the second vehicle may confirm that one of the objects detected by the third vehicle is the first vehicle that transmits the first CPM or the second vehicle that transmits the second CPM. In this case, the first V2X communication device of the first vehicle and second V2X communication device ID of the second vehicle, which are the matching stations, may be identified by each station ID information.

Thus, through the transmission of the third CPM including the OVC including the information of the matched object and the SPO including the information of the matching station, the first vehicle and the second vehicle may not allow duplicate information to be included when CPM is generated later. Thus, the size of the CPM can be reduced.

After the update process of t1 to t3 described above, each vehicle V2X communication device may generate and then transmit an optimized CPM. In this case, since the objects detected by each vehicle V2X communication device correspond to the vehicle V2X communication devices transmitting information about their own vehicles, it is possible to prevent the transmission of redundant information by including the SPOC in the CPM instead of the POC. Thus, it is possible to prevent the transmission of the duplicated object information.

For example, as shown at t4 in FIG. 15A, the first vehicle V2X communication device may generate an optimized or updated first CPM. The optimized first CPM is as shown in the lower second part of FIG. 15B. As shown in the drawing, the optimized first CPM may include an ITS PDU header, OVC, FVC, POC and/or SPOC. The OVC may include matching object ID information and/or matching object ratio information of the first vehicle. Also, the SPOC may include matching station ID information and/or matching station ratio information of the second vehicle and third vehicle.

As another example, as shown at t5 in FIG. 15A, the second vehicle V2X communication device may generate an optimized or updated second CPM. The optimized second CPM is as shown in the lowest part of FIG. 15B. As shown in the drawing, the optimized second CPM may include an ITS PDU header, OVC, FVC, and/or SPOC. The OVC may include matching object ID information and/or matching object ratio information of the second vehicle. Also, the SPOC may include matching station ID information and/or matching station ratio information of the first vehicle and third vehicle.

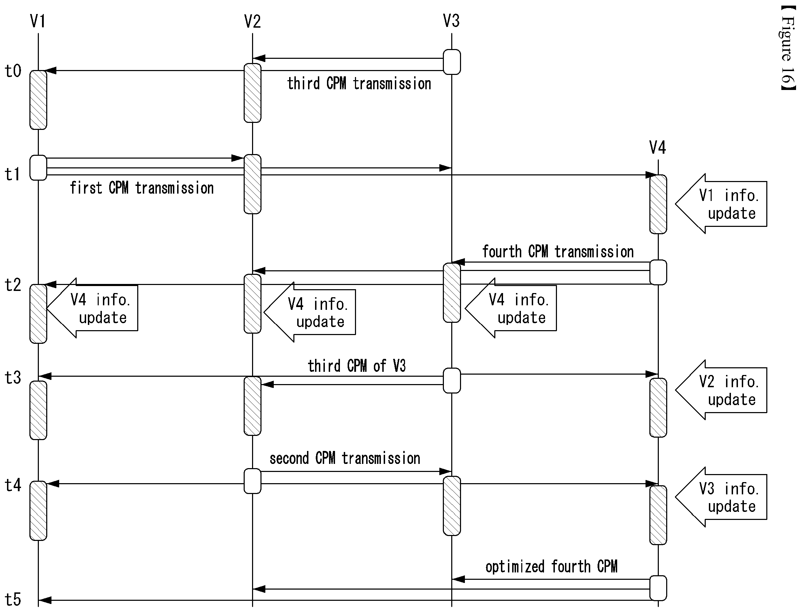

As described above, each vehicle may use the information in the CPM provided by the surrounding vehicle to generate an optimized CPM and thus reduce the size of the CPM data. In an optimized state through this update process, if a new vehicle enters, each vehicle may again perform the update process to achieve optimization of the CPM. This will be described below with reference to FIG. 16.

FIG. 16 is a view illustrating a method by which a V2X communication device communicates with another V2X communication device using CPM according to another embodiment of the present invention. In the embodiment of FIG. 16, it is assumed that the structure of the CPM follows the structure of FIG. 11. Also, in the embodiment of FIG. 16, it is assumed that a new fourth vehicle enters after the CPM optimization is performed as shown in FIG. 15. It is assumed that the newly entered fourth vehicle is located within the communication range and the sensing range of the first vehicle to the third vehicle.

Referring to t0 of FIG. 16, the first vehicle to the third vehicle may perform communication using the optimized CPM through the update process described in FIG. 15. In this case, the new fourth vehicle may enter the communication and sensing range of the first vehicle to the third vehicle.

Referring to t1 of FIG. 16, the first vehicle transmits a first CPM, and the second vehicle to the fourth vehicle receive the first CPM. In this case, the first CPM does not include object information about the fourth vehicle. The fourth vehicle may use the received first CPM information to update the information of the first vehicle.

Referring to t2 of FIG. 16, the fourth vehicle transmits a fourth CPM, and the first vehicle to the third vehicle receive the fourth CPM. Through the updating of the first vehicle information, the fourth CPM may include an OVC having matched object ID information of the fourth vehicle, a POC having state information of the second vehicle and the third vehicle detected by the fourth vehicle, and/or a SPOC having station ID information of the first vehicle.

Referring to t3 of FIG. 16, the second vehicle transmits a second CPM, and the first vehicle, the third vehicle and the fourth vehicle receive the second CPM. In this case, the fourth vehicle may update the information of the second vehicle using the second CPM.

Referring to t4 of FIG. 16, the third vehicle transmits a third CPM, and the first vehicle, the second vehicle and the fourth vehicle receive the third CPM. In this case, the fourth vehicle may update the information of the third vehicle using the third CPM.

After t5 of FIG. 16, each vehicle may perform optimized communication using the optimized CPM including the SPOC instead of the POC. Through the update process described at t2 to t4 of FIG. 10, the first to fourth vehicles may update mutual information, and may perform optimized communication using the optimized CPM. For example, the optimized fourth CPM may include an OVC having matched object ID information of the fourth vehicle, SPOC having matched station ID information of the first vehicle, the second vehicle and the third vehicle detected by the fourth vehicle.

Thus, even when a new vehicle enters in the optimized state of the CPM, each vehicle may again optimize the CPM through the update process described above.

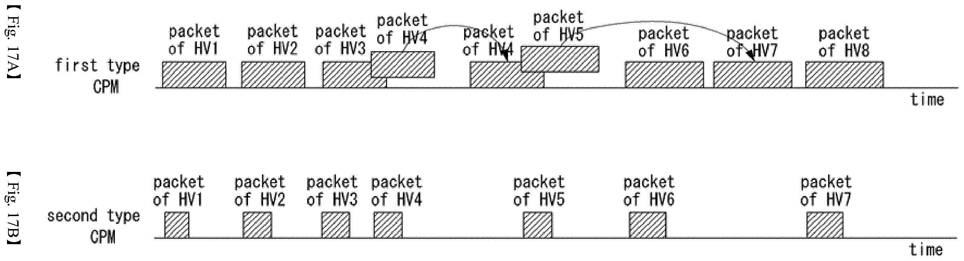

FIG. 17A is a view illustrating a state of a communication channel when the CPM structure of FIG. 5 is used, and FIG. 17B is a view illustrating a state of a communication channel when the CPM structure of FIG. 11 is used.

When the V2X communication device uses the CPM structure (first type CPM) of FIG. 5, the CPM size becomes large in a congestion situation as shown in FIG. 11. For example, as shown in FIG. 17A, the probability of collision between packets under a high CBR environment is increased due to an increase in the size of a transmission packet (or transmission frame) including the CPM. Also, this causes an increase of back-off, and the communication performance becomes worse.

However, when the V2X communication device uses the CPM structure (second type CPM) of FIG. 11, the size of the CPM may be reduced by removing redundant information. For example, as shown in FIG. 17B, the probability of collision between packets even under a high CBR environment is reduced due to a reduction in the size of a transmission packet (or transmission frame) including the CPM. Accordingly, it is possible to prevent the communication performance from being deteriorated.

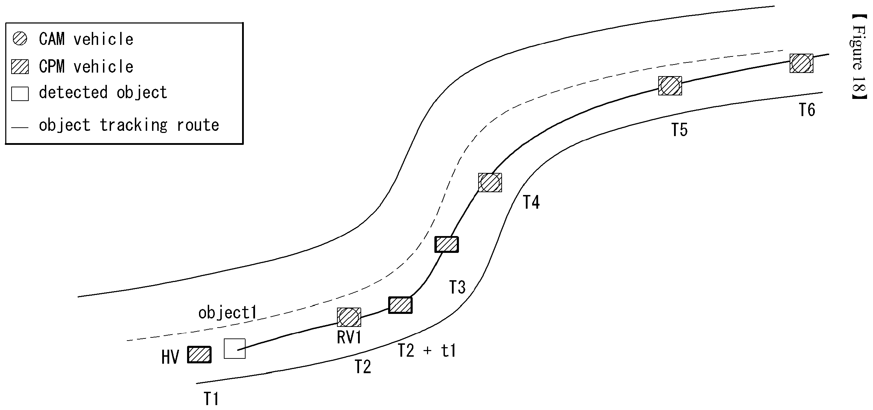

FIG. 18 is a view illustrating a method of determining, by a V2X communication device, whether or not a transmission detection object is the same object as a surrounding vehicle that has transmitted a receiving V2X message according to an embodiment of the present invention.

In the embodiment of FIG. 18, a vehicle that receives a V2X message and determines whether or not objects are the same object is referred to as a Host Vehicle (HV) or an Originating Vehicle (OV), and a surrounding vehicle that transmits a received V2X message is referred to as a Remote Vehicle (RV). The originating detection object is an object (e.g., a vehicle) detected by the V2X communication device of the HV or HV. Also, it is assumed that the HV and RV are within the communication range and sensing range with each other.

At T1 of FIG. 18, the HV may detect an object located therearound through a sensor of the HV. However, at this point, the HV may not recognize whether or not the corresponding object is an RV1. Accordingly, the HV may include state information of the originating detection object in the POC of the CPM.

Thereafter, at T2 of FIG. 18, the RV1 may transmit a V2X message. In this case, the V2X message may be a CAM or a CPM. For example, when the V2X message is a CAM, the RV1 may generate a CAM that includes its own position and state information, and may broadcast the CAM through a V2X communication device of the RV. Also, the CAM may include the generation time information of the CAM.

Thereafter, at T2 + t1 of FIG. 18, the HV may receive this V2X message. For example, the HV may receive the CAM transmitted by the RV1. In this case, the HV may compare the position of the RV1 with the position at which the originating detection objects detecting and tracking through the sensor of the HV were at the T2 time. In this case, the position information of the RV1 may be obtained from the CAM. Thus, the HV may determine whether or not the RV1 and the originating detection object are the same object.

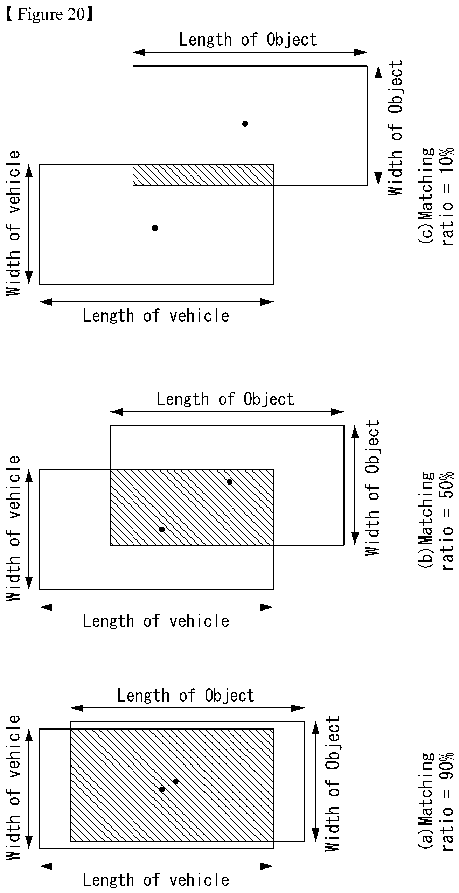

For example, when the position of any one of the originating detection objects at T2 time and the position of the RV1 match or overlap with each other, the HV may determine that the originating detection object and RV1 are the same object. In an embodiment, when the position of one of the originating detection objects and the position of the RV1 are within a predetermined distance, the HV may determine that the position of any one of the originating detection objects and the position of the RV1 match or overlap with each other. Also, the HV may calculate the matching confidence (or matching ratio) by calculating the matched ratio or the overlapped ratio. This will be described in detail below with reference to FIG. 20.

Thereafter, in order to indicate that the RV1 and the corresponding originating detection object are the same object, the HV may include the station ID information of the RV1 in the SPOC together with the matching station ratio information. In this case, the station ID information of the RV1 may be obtained from the V2X message (e.g., CAM) transmitted by the RV1. Thus, the HV can reduce the size of the CPM.

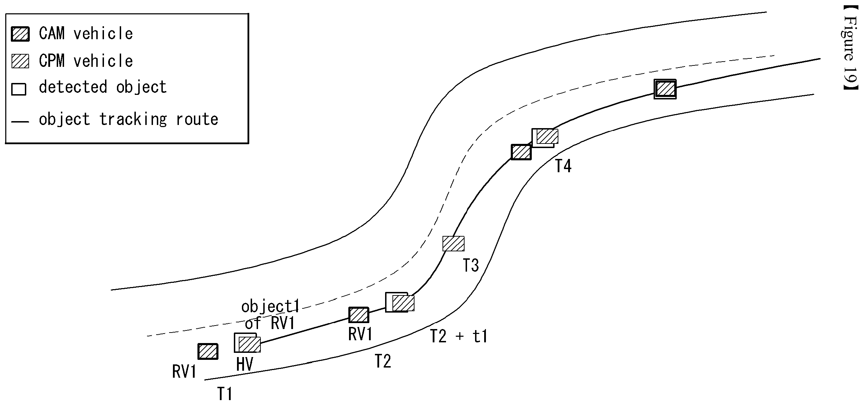

FIG. 19 is a view illustrating a method of determining, by a V2X communication device, whether or not the V2X communication device is the same object as a receiving detection object according to an embodiment of the present invention.

In the embodiment of FIG. 19 like the embodiment of FIG. 18, a vehicle that receives a V2X message and determines whether or not objects are the same object is referred to as a Host Vehicle (HV) or an Originating Vehicle (OV), and a surrounding vehicle that transmits a received V2X message is referred to as a Remote Vehicle (RV). The receiving detection object is an object (e.g., a vehicle) detected by the V2X communication device of the RV or RV. The information on the receiving detection object may be obtained, for example, through the POC in the CPM. Also, it is assumed that the HV and RV are within the communication range and sensing range with each other.

At T1 of FIG. 19, the HV may detect an object located therearound through a sensor of the HV or a sensor of V2X communication device of the HV. However, at this point, the HV may not recognize whether or not the corresponding originating detection object is an RV1. Also, the RV may detect an object located therearound through the sensor of the RV1. However, the RV1 may also not recognize whether or not the receiving detection object is HV. Accordingly, the HV and the RV1 may include the state information of the originating detection object and the receiving detection object in the POC of each CPM, respectively.

Thereafter, at T2 of FIG. 19, the RV1 may transmit a first CPM message. For example, the RV1 may generate and broadcast the first CPM including the OVC having its own position and state information and the POC having the state information of the receiving detection object.

Thereafter, at T2 + t1 of FIG. 19, the HV may receive this first CPM.

In one embodiment, the HV may compare the position of the HV of the T2 time with the position of the receiving detection object. In this case, the position information of the receiving detection object may be obtained from the POC of the first CPM that is received. Thus, the HV may determine whether or not itself and the receiving detection object are the same object.

For example, when the position of any one of the receiving detection objects at T2 time and the position of the HV match or overlap with each other, the HV may determine that the receiving detection object and HV are the same object. In an embodiment, when the position of one of the receiving detection objects and the position of the HV are within a predetermined distance, the HV may determine that the position of any one of the originating detection objects and the position of the HV match or overlap with each other. Also, the HV may calculate the matching confidence (or matching ratio) by calculating the matched ratio or the overlapped ratio. This will be described in detail below with reference to FIG. 20.

Thereafter, in order to indicate that the HV and the corresponding originating detection object are the same object, the HV may include the object ID information of the HV in the OVC together with the matching object ratio information. In this case, the object ID information of the HV may be obtained from the POC of the CPM transmitted by the RV1. Thus, the HV can reduce the size of the CPM.

In another embodiment, the HV may compare the position of the RV1 with the position at which the originating detection objects detecting and tracking through the sensor of the HV were at the T2 time. In this case, the position information of the RV1 may be obtained from the OVC of the first CPM. Thus, the HV may determine whether or not the RV1 and the originating detection object are the same object.

For example, when the position of any one of the originating detection objects at T2 time and the position of the RV1 match or overlap with each other, the HV may determine that the originating detection object and RV1 are the same object. In an embodiment, when the position of one of the originating detection objects and the position of the RV1 are within a predetermined distance, the HV may determine that the position of any one of the originating detection objects and the position of the RV1 match or overlap with each other. Also, the HV may calculate the matching confidence (or matching ratio) by calculating the matched ratio or the overlapped ratio. This will be described in detail below with reference to FIG. 19.

Thereafter, in order to indicate that the RV1 and the corresponding originating detection object are the same object, the HV may include the station ID information of the RV1 in the SPOC together with the matching station ratio information. In this case, the station ID information of the RV1 may be obtained from the V2X message (e.g., first CPM) transmitted by the RV1. Thus, the HV can reduce the size of the CPM.

Thereafter, at T3 of FIG. 19, the HV may generate and broadcast a second CPM including the OVC and SPOC.

Thereafter, at T4 of FIG. 19, the RV1 may receive this second CPM. In this case, the RV1 may recognize that one of the receiving detection objects and the HV are the same object using the OVC in the second CPM. In this case, the receiving detection object may be identified by the object ID information included in the OVC of the second CPM. Thereafter, the RV may generate an optimized first CPM including the SPOC at its transmission period, and may broadcast the optimized first CPM. In this case, the SPOC of the first CPM may include the station ID information and the matching station ratio information of the HV.

FIG. 20 is a view illustrating a method of calculating matching ratio information by a V2X communication device according to an embodiment of the present invention.

The matching ratio information may indicate the degree of matching or the matching ratio of the two objects. For example, the matching ratio information may indicate the degree of matching or the matching ratio of the receiving detection object and the originating vehicle. In another embodiment, the matching ratio information may indicate the degree of matching or the matching ratio of the originating detection object and the receiving vehicle.

The V2X communication device may calculate the matching ratio information in various ways. For example, the V2X communication device may calculate the matching ratio information by comparing the length, width, and reference position information of the vehicle corresponding to the receiving detection object with the length, width, and reference position information of the originating vehicle and calculating the overlapped area. In this case, the information of the receiving detection object may be obtained from the received V2X message (e.g., CPM). In another example, the V2X communication device may calculate the matching ratio information by comparing the length, width, and reference position information of the vehicle corresponding to the originating detection object with the length, width, and reference position information of the vehicle that transmits the received V2X message and calculating the overlapped area. In this case, the information of the vehicle transmitting the received V2X message may be obtained from the received V2X message (e.g., CPM or CAM).

As described in FIG. 14, the matching ratio information may be expressed as an integer value having a value from 0 to 100, and the unit of the value may be a percentage representing a matching ratio. For example, as shown in FIG. 20A, when the matching ratio is 90%, the matching ratio information may be set to 90. Alternatively, as shown in FIG. 20B, when the matching ratio is 50%, the matching ratio information may be set to 50. Alternatively, as shown in FIG. 20C, when the matching ratio is 10%, the matching ratio information may be set to 10. Using this matching ratio information, the V2X communication device may determine whether to recognize that two objects match with each other according to each criterion.

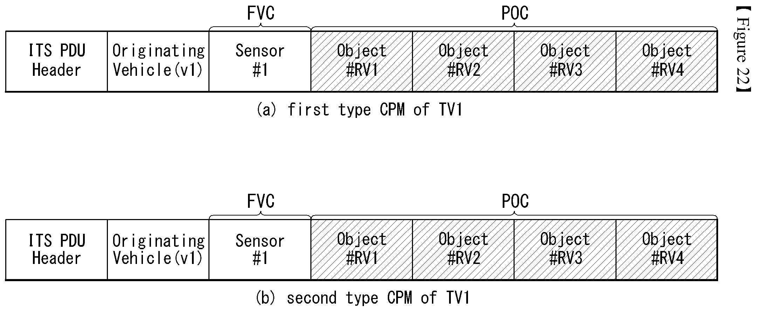

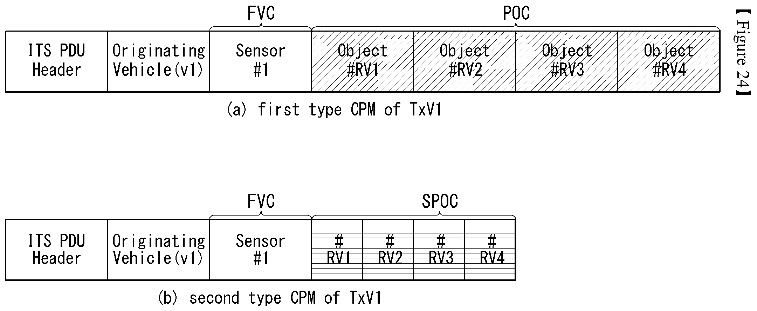

Hereinafter, the efficiencies of the CP services provided by the V2X communication device using the CPM structure of FIG. 4 and the V2X communication device using the CPM structure of FIG. 10 are compared for each situation. FIG. 20 considers a first situation in which only a normal vehicle is located around an originating vehicle that transmits a CPM, and FIG. 22 considers a second situation in which a vehicle (CAM vehicle) that transmits a CAM is located around an originating vehicle that transmits a CPM. Also, FIG. 24 considers a third situation in which a normal vehicle, a CAM vehicle, and a vehicle (CPM vehicle) that transmits a CPM are located around an originating vehicle transmitting a CPM.

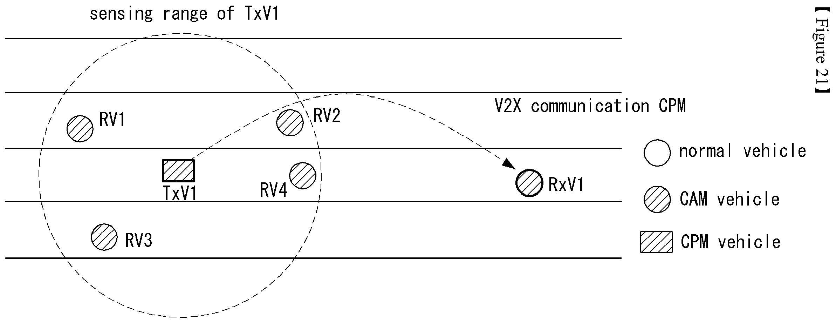

FIG. 21 is a view illustrating a method of generating and transmitting, by an originating vehicle, a CPM in a first situation according to an embodiment of the present invention. FIG. 22 is a view illustrating the CPM generated by the originating vehicle of FIG. 21. FIG. 22A shows a CPM generated by an originating vehicle when the originating vehicle of FIG. 21 uses the CPM structure of FIG. 5, and FIG. 22B shows a CPM generated by an originating vehicle when the originating vehicle of FIG. 21 uses the CPM structure of FIG. 11. Hereinafter, the CPM of FIG. 22A will be referred to as a first CPM, and the CPM of FIG. 22B will be referred to as a second CPM.

As described above, in the first situation of FIG. 21, it is assumed that only a normal vehicle is located around the originating vehicle that transmits the CPM. Here, the normal vehicle is a vehicle unequipped with an V2X communication device. Accordingly, the normal vehicle may not generate and transmit a V2X message.

Referring to FIG. 21, the originating vehicle may detect the surrounding vehicles RV1 to RV4 through a sensor, and may generate a POC using the information of the detected vehicles. Also, the originating vehicle may generate and broadcast a CPM that includes the POC. The receiving vehicle receiving the CPM may confirm that the vehicles are located around the originating vehicle. In addition, the receiving vehicle may use the CPM information for vehicle safety and the like.

Referring to FIG. 22A, the first CPM may include an ITS PDU header, OVC, FVC, and POC. Referring to FIG. 22B, similarly to FIG. 22A, the second CPM may include an ITS PDU header, OVC, FVC, and POC. In this case, the POC may include state information about each of the normal vehicles RV1 to RV4 detected by the originating vehicle.

Thus, in the first situation of FIG. 21, since the vehicle detected by the originating vehicle is a normal vehicle that cannot transmit an V2X message, the originating vehicle may not receive the V2X message from the normal vehicle. Accordingly, the originating vehicle may not perform the optimization process of CPM as shown in FIG. 15. Thus, as shown in the drawing, the first CPM and the second CPM include the same information, and have the same size. Accordingly, there is no difference in the efficiency of the CP service in the first situation of FIG. 21. In other words, the V2X communication device provides the same performance regardless of the CPM architecture that is used.

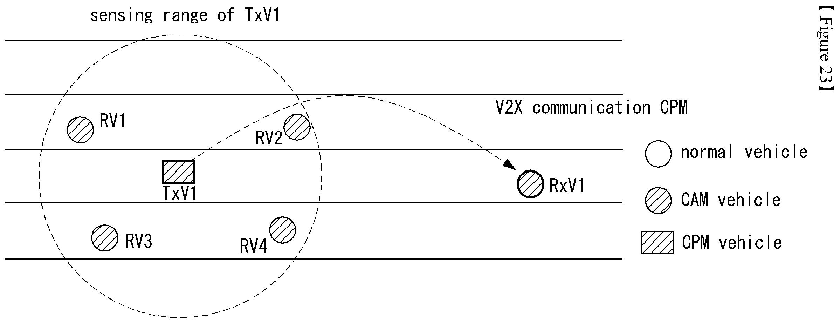

FIG. 23 is a view illustrating a method of generating and transmitting, by an originating vehicle, a CPM in a second situation according to an embodiment of the present invention. FIG. 24 is a view illustrating the CPM generated by the originating vehicle of FIG. 22. In FIGS. 23 and 24, descriptions overlapping with those described above in FIGS. 21 and 22 will be omitted.

FIG. 24A shows a CPM generated by an originating vehicle when the originating vehicle of FIG. 23 uses the CPM structure of FIG. 5, and FIG. 24B shows a CPM generated by an originating vehicle when the originating vehicle of FIG. 23 uses the CPM structure of FIG. 11. Hereinafter, the CPM of FIG. 24A will be referred to as a first CPM, and the CPM of FIG. 24B will be referred to as a second CPM.

As described above, in the second situation of FIG. 23, it is assumed that only a CAM vehicle is located around the originating vehicle that transmits the CPM. Here, the CAM vehicle is a vehicle equipped with an V2X communication device but unequipped with a sensor. Accordingly, the CAM vehicle may generate and transmit a CAM, but may not generate and transmit a CPM.

Referring to FIG. 23, the originating vehicle may detect the surrounding vehicles RV1 to RV4 through a sensor, and may generate a POC using the information of the detected vehicles. Also, the originating vehicle may generate and broadcast a CPM that includes the POC. The receiving vehicle receiving the CPM may confirm that the vehicles are located around the originating vehicle. In addition, the receiving vehicle may use the CPM information for vehicle safety and the like.

In addition, the originating vehicle may optimize the CPM by updating the information of the surrounding CAM vehicle using the information of the CAM received from the surrounding CAM vehicle. The optimization process has been described with reference to FIG. 15, and a detail description thereof will be omitted below.

Referring to FIG. 24A, the first CPM may include an ITS PDU header, OVC, FVC, and POC. In this case, the POC may include state information about each of the CAM vehicles RV1 to RV4 detected by the originating vehicle.

Referring to FIG. 24B, the second CPM may include an ITS PDU header, OVC, FVC, and POC. In this case, the SPOC may include station ID information about each of the CAM vehicles RV1 to RV4 detected by the originating vehicle. This SPOC has a smaller size than the POC. Accordingly, the second CPM has a smaller size than the first CMP.

Thus, in the second situation shown in FIG. 23, since the vehicle detected by the originating vehicle is a CAM vehicle capable of transmitting the CAM, the originating vehicle may not receive the CAM from the CAM vehicle. Accordingly, the originating vehicle may perform the optimization process of CPM as shown in FIG. 14. Thus, the second CPM may have a smaller size than the first CPM information due to removal of redundant information through the CPM optimization. Accordingly, in the second situation of FIG. 23, the V2X communication device that can use the CPM structure of FIG. 11 can provide a CP service of better efficiency.

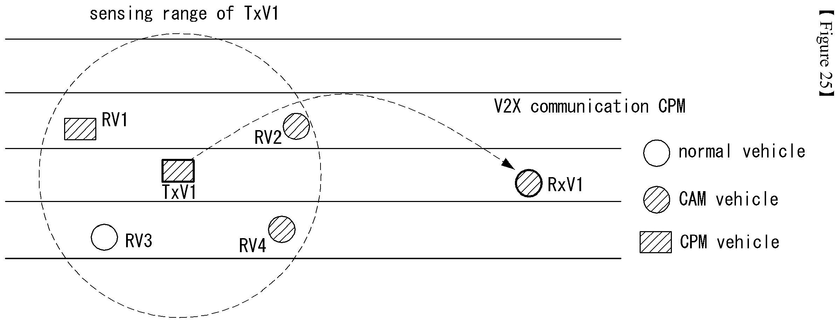

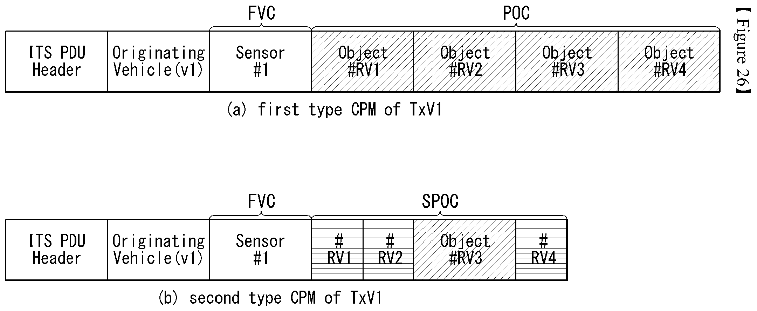

FIG. 25 is a view illustrating a method of generating and transmitting, by an originating vehicle, a CPM in a third situation according to an embodiment of the present invention. FIG. 26 is a view illustrating the CPM generated by the originating vehicle of FIG. 25. In FIGS. 25 and 26, descriptions overlapping with those described above in FIGS. 21 to 24 will be omitted.

FIG. 26A shows a CPM generated by an originating vehicle when the originating vehicle of FIG. 25 uses the CPM structure of FIG. 5, and FIG. 26B shows a CPM generated by an originating vehicle when the originating vehicle of FIG. 25 uses the CPM structure of FIG. 11. Hereinafter, the CPM of FIG. 26A will be referred to as a first CPM, and the CPM of FIG. 26B will be referred to as a second CPM.

As described above, in the third situation of FIG. 25, it is assumed that a normal vehicle, a CAM vehicle and a CPM vehicle are located around the originating vehicle that transmits the CPM. Here, the CPM vehicle is a vehicle equipped with a V2X communication device and a sensor. Accordingly, the CPM vehicle may generate and transmit a CPM.

Referring to FIG. 25, the originating vehicle may detect the surrounding vehicles RV1 to RV4 through a sensor, and may generate a POC using the information of the detected vehicles. Also, the originating vehicle may generate and broadcast a CPM that includes the POC. The receiving vehicle receiving the CPM may confirm that the vehicles are located around the originating vehicle. In addition, the receiving vehicle may use the CPM information for vehicle safety and the like.

In addition, the originating vehicle may optimize the CPM by updating the information of the surrounding vehicles using the information of the CAM received from the surrounding CAM vehicle and/or the information of the CPM received from the surrounding CPM vehicle. The optimization process has been described with reference to FIG. 14, and a detail description thereof will be omitted below.

Referring to FIG. 26A, the first CPM may include an ITS PDU header, OVC, FVC, and POC. In this case, the POC may include state information about each of the vehicles RV1 to RV4 detected by the originating vehicle.

Referring to FIG. 26B, the second CPM may include an ITS PDU header, OVC, FVC, and POC. In this case, the SPOC may include station ID information about each of the CAM vehicles and CPM vehicles RV1, RV2, and RV4 detected by the originating vehicle. This SPOC has a smaller size than the POC. Accordingly, the second CPM has a smaller size than the first CMP. Also, the OVC may include the object ID information of a receiving detection object matched with the originating vehicle.

Thus, in the third situation of FIG. 25, since the vehicle detected by the originating vehicle includes the CAM vehicle or the CPM vehicle, the originating vehicle may not receive the CAM or the CPM from the CAM vehicle or the CPM vehicle. Accordingly, the originating vehicle may perform the optimization process of CPM as shown in FIG. 14. Thus, the second CPM may have a smaller size than the first CPM information due to removal of redundant information through the CPM optimization. Accordingly, in the third situation of FIG. 25, the V2X communication device that can use the CPM structure of FIG. 11 can provide a CP service of better efficiency.

Hereinafter, the configuration of the V2X communication device for the embodiments described above will be described. Next, a method of transmitting and receiving the CPM by the V2X communication device will be described.

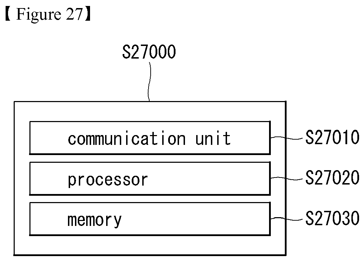

FIG. 27 is a view illustrating a configuration of a V2X communication device according to an embodiment of the present invention. In an embodiment, the V2X communication device may correspond to an ITS station or may be included in the ITS station.

In FIG. 27, a V2X communication device 27000 may include a communication unit 27010, a processor 27020, and a memory 27030.

The communication unit 27010 may be connected to the processor 27020 to transmit/receive wireless signals. The communication unit 27010 may upconvert data received from the processor 27020 to a transmission/reception band to transmit a signal, or may downconvert a reception signal. The communication unit 27010 may implement an operation of at least one of a physical layer and an access layer.

The communication unit 27010 may include a plurality of sub-RF units for communicating in accordance with a plurality of communication protocols. In an embodiment, the communication unit 27010 may perform data communication, based on a Dedicated Short Range Communication (DSRC) technology, an IEEE 802.11 and/or 802.11p standards-based communication technology, an ITS-G5 wireless communication technology based on a physical transmission technology of the IEEE 802.11 and/or 802.11p standards, a 2G/3G/4G (LTE)/5G wireless cellular communication technology including satellite/broadband wireless mobile communication, a broadband terrestrial digital broadcasting technology such as DVB-T/T2/ATSC, a GPS technology, and an IEEE 1609 WAVE technology. The communication unit 27010 may also include a plurality of transceivers that implement each communication technology.

The processor 27020 may be connected to the RF unit 27030 to implement operations of the layers of the V2X communication device. The processor 27020 may be configured to perform operations in accordance with various embodiments of the present invention according to the above drawings and descriptions. Also, at least one of the modules, data, programs, or software that implement the operations of V2X communication device 27000 according to various embodiments of the invention described above may be stored in memory 27010, and may be executed by the processor 27020.

The memory 27010 is connected to the processor 27020, and may store various kinds of information for driving the processor 27020. The memory 27010 may be included in the processor 27020, or may be disposed outside the processor 27020 to be connected to the processor 27020 through a well-known unit.

The processor 27020 of the V2X communication device 27000 may perform generation and transmission of the CPM described in the embodiments. A method of generating and transmitting the CPM by the V2X communication device 27000 will be described below.

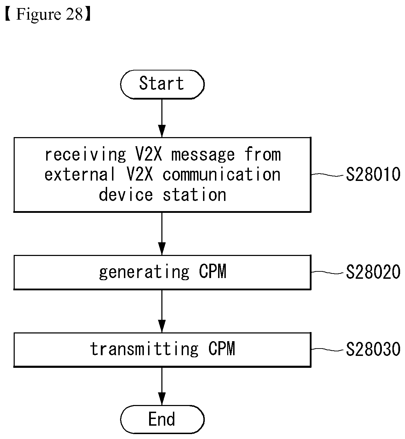

FIG. 28 is a flowchart illustrating a method of transmitting a V2X message by a V2X communication device according to an embodiment of the present invention. In the embodiment of FIG. 28, the V2X communication device may be a V2X communication device of a vehicle. The vehicle may be equipped with a sensor, and may detect surrounding objects using the sensor. In an embodiment, the V2X communication device may correspond to an ITS station or may be included in the ITS station.

The V2X communication device may receive, from an external V2X communication device, a V2X message providing basic information related to the external V2X communication device (S28010). The V2X message may be a CPM or a CAM. In an embodiment, the V2X message may include ID information (station ID information) identifying the external V2X communication device and position information indicating the position of the external V2X communication device.

The V2X communication device may generate a Collective Perception (CP) message to generate a collective perception for at least one first detection object detected by the V2X communication device (S28020). The CP message (CPM) is as described in FIG. 5 and FIG. 11.

In one embodiment, the generating of the CP message may include determining, based on the V2X message, whether an object related to the external V2X communication device is the same object as one of the at least one first detection object. This is as described in FIGS. 5, 11, and 18.

When it is determined that the object related to the external V2X communication device is not the same object as at least one first detection object, the CP message may include first object information providing a description of the first detection object. In an embodiment, the first object information may be information included in the above-mentioned POC.

In an embodiment, the first object information may include at least one of object ID information for identifying the first detection object, sensor ID information for identifying a sensor used for detection of the first detection object, distance information indicating a relative distance to the first detection object, or speed information indicating the speed of the first detection object.

When it is determined that the object related to the external V2X communication device is the same object as one of the at least one first detection object, the CP message may include second object information different from the first object information. In an embodiment, the second object information may be information included in the above-mentioned SPOC.

In an embodiment, the second object information may include ID information (station ID information) of the external V2X communication device. In this case, the second object information may have a smaller size than the first object information.

In an embodiment, the CP message may further include vehicle information providing basic information related to the V2X communication device. In an embodiment, the vehicle information may be included in the above-mentioned OVC.

In an embodiment, the vehicle information may include at least one of position information indicating the position of the V2X communication device, direction information indicating the direction of the V2X communication device, speed information indicating the speed of the V2X communication device, vehicle length information indicating the length of the vehicle, or vehicle width information indicating the width of the vehicle. Also, the V2X message may further include information on at least one second detection object detected by the external V2X communication device. In this case, the information on the second detection object may include object ID information for identifying the second detection object and position information indicating the position of the detection object.

In another embodiment, the generating of the CP message may further include determining, based on the V2X message, whether the vehicle is the same object as one of the at least one second detection objects. When the vehicle is determined to be the same object as one of the at least one second detection objects, the vehicle information may include object ID information of the same second detection object as the vehicle. This is as described in FIGS. 5, 11, and 19.

The V2X communication device may transmit a CP message via a V2X network (S28030). In an embodiment, the generated CP message may be generated and transmitted as a wireless signal through a network and transport layer processing and access layer processing.

In the embodiments described above, the components and features of the present invention are combined in certain forms. Each component or feature should be considered as selective unless explicitly mentioned otherwise. Each component or feature can be implemented in such a form that is not combined with other components or features. Also, it is possible to configure the embodiments of the present invention by combining some of the elements and/or features. The order of the operations described in the embodiments of the present invention can be changed. Some configurations or features of any embodiment may be included in other embodiments, or may be replaced with the corresponding configurations or features of other embodiments. It is obvious that the an embodiment can be configured by combining claims which are in explicit citation relationship with each other and a new claim can be included by amendment after the application.

The embodiments according to the present invention may be implemented by various units, for example, hardware, firmware, software, or a combination thereof. In the case of implementation by hardware, an embodiment of the present invention may be implemented by one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, and the like.

In the case of implementation by firmware or software, an embodiment of the present invention may be implemented in a form of a module, a procedure, a function, and the like which perform the functions or operations described above. The software code may be stored in a memory, and may be driven by a processor. The memory is located inside or outside the processor, and may exchange data with the processor by various units that are already known.

The device and method inventions are all referred to in this specification, and the description of both device and method inventions can be supplemented and applied to each other.

Various embodiments have been described in the best mode for carrying out the invention.

The present invention is used in a series of V2X communication fields.

According to the embodiments, an Intelligent Transport System (ITS) station can provide a Collective Perception (CP) message to generate a collective perception for a road user and other objects detected and recognized by the ITS station. Thus, not only the information of the ITS station itself but also the information of the surrounding objects detected by the ITS station can be shared with other ITS stations. Accordingly, a receiving ITS station can obtain information about a surrounding object even when the surrounding object detected by the ITS station is an object unequipped with the ITS station, and can use the information for traffic safety.

Also, according to the embodiments, the ITS station can generate an optimized CP message by removing redundant information based on a received V2X message. Thus, even when a surrounding object detected by the ITS station transmits an V2X message, it is possible to reduce the size of the CP message by removing redundant information. Accordingly, the communication efficiency can be improved.

## Claims

1. A method of transmitting a V2X message performed by a V2X communication device of a vehicle, the method comprising:
receiving (S28010), from an external V2X communication device, a first Collective Perception, CP, message providing ID information identifying the external V2X communication device and position information indicating the position of the external V2X communication device;
generating (S28020) a second CP message including information for at least one detection object detected by the V2X communication device; and
transmitting (S28030) the second CP message,
**characterized in that**
when the external V2X communication device is not determined to be the same object as the detection object, the second CP message comprises first object information providing a description of the detection object, and
wherein when the external V2X communication device is determined to be the same object as the detection object, the second CP message comprises second object information different from the first object information, said second object information having a smaller size than the first object information and comprising the ID information of the external V2X communication device.

2. The method of claim 1, wherein the first object information comprises at least one of object ID information for identifying the detection object, sensor ID information for identifying a sensor used for detection of the detection object, distance information for a relative distance to the detection object, or speed information for a speed of the detection object.

3. A V2X communication device of a vehicle, comprising:
a memory (S27030) configured to store data;
a communication unit (S27010) configured to transmit and receive a wireless signal comprising an V2X message; and
a processor (S27020) configured to control the memory and the communication unit,
wherein the processor is further configured to:
receive, from an external V2X communication device, a first Collective Perception, CP, message providing ID information identifying the external V2X communication device and position information indicating the position of the external V2X communication device;
generate a second CP message for at least one detection object detected by the V2X communication device; and
transmit the second CP message,
**characterized in that** the processor is further configured to
when the external V2X communication device is not determined to be the same object as the detection object, the second CP message comprises first object information providing a description of the detection object, and
wherein when the external V2X communication device is determined to be the same object as the detection object, the second CP message comprises second object information different from the first object information, said second object information having a smaller size than the first object information and comprising the ID information of the external V2X communication device.

4. The V2X communication device of claim 3, wherein the first object information comprises at least one of object ID information for identifying the detection object, sensor ID information for identifying a sensor used for detection of the detection object, distance information for a relative distance to the detection object, or speed information for a speed of the detection object.

## Patentansprüche

1. Verfahren zum Senden einer V2X-Meldung wobei das Verfahren von einer V2X-Kommunikationsvorrichtung eines Fahrzeugs durchgeführt wird und aufweist:
Empfangen (S28010) einer ersten Collective Perception, CP, Meldung aus einer externen V2X-Kommunikationsvorrichtung, wobei die erste CP-Meldung eine die externe V2X-Kommunikationsvorrichtung identifizierende ID-Information und eine die Position der externen V2X-Kommunikationsvorrichtung angebende Positionsinformation bereitstellt;
Erzeugen (S28020) einer zweiten CP-Meldung, die Information für mindestens ein von der V2X-Kommunikationsvorrichtung detektiertes Detektionsobjekt aufweist; und
Senden (S28030) der zweiten CP-Meldung,
**dadurch gekennzeichnet, dass**
wenn bestimmt wird, dass die externe V2X-Kommunikationsvorrichtung nicht das gleiche Objekt wie das Detektionsobjekt ist, die zweite CP-Meldung eine erste Objektinformation aufweist, die eine Beschreibung des Detektionsobjekts bereitstellt, und
wenn bestimmt wird, dass die externe V2X-Kommunikationsvorrichtung das gleiche Objekt wie das Detektionsobjekt ist, die zweite CP-Meldung eine zweite Objektinformation, die sich von der ersten Objektinformation unterscheidet, aufweist, wobei die zweite Objektinformation eine kleinere Größe als die erste Objektinformation hat und die ID-Information der externen V2X-Kommunikationsvorrichtung aufweist.

2. Verfahren nach Anspruch 1, wobei die erste Objektinformation mindestens eine der folgenden Informationen aufweist: Objekt-ID-Information zum Identifizieren des Detektionsobjekts, Sensor-ID-Information zum Identifizieren eines zur Detektion des Detektionsobjekts verwendeten Sensors, Abstandsinformation für einen relativen Abstand zu dem Detektionsobjekt oder Geschwindigkeitsinformation für eine Geschwindigkeit des Detektionsobjekts.

3. V2X-Kommunikationsvorrichtung eines Fahrzeugs, aufweisend:
einen Speicher (S27030), der konfiguriert ist, um Daten zu speichern;
eine Kommunikationseinheit (S27010), die konfiguriert ist, um ein drahtloses Signal, das eine V2X-Meldung aufweist, zu senden und zu empfangen; und
einen Prozessor (S27020), der konfiguriert ist, um den Speicher und die Kommunikationseinheit zu steuern,
wobei der Prozessor ferner konfiguriert ist, um:
eine erste Collective Perception, CP, Meldung aus einer externen V2X-Kommunikationsvorrichtung zu empfangen, wobei die erste CP-Meldung eine die externe V2X-Kommunikationsvorrichtung identifizierende ID-Information und eine die Position der externen V2X-Kommunikationsvorrichtung angebende Positionsinformation bereitstellt;
eine zweite CP-Meldung für mindestens ein von der V2X-Kommunikationsvorrichtung detektiertes Detektionsobjekt zu erzeugen; und
die zweite CP-Meldung zu senden,
**dadurch gekennzeichnet, dass** der Prozessor ferner derart konfiguriert ist, dass
wenn bestimmt wird, dass die externe V2X-Kommunikationsvorrichtung nicht das gleiche Objekt wie das Detektionsobjekt ist, die zweite CP-Meldung eine erste Objektinformation aufweist, die eine Beschreibung des Detektionsobjekts bereitstellt, und
wenn bestimmt wird, dass die externe V2X-Kommunikationsvorrichtung das gleiche Objekt wie das Detektionsobjekt ist, die zweite CP-Meldung eine zweite Objektinformation, die sich von der ersten Objektinformation unterscheidet, aufweist, wobei die zweite Objektinformation eine kleinere Größe als die erste Objektinformation hat und die ID-Information der externen V2X-Kommunikationsvorrichtung aufweist.

4. V2X-Kommunikationsvorrichtung nach Anspruch 3, wobei die erste Objektinformation mindestens eine der folgenden Informationen aufweist: Objekt-ID-Information zum Identifizieren des Detektionsobjekts, Sensor-ID-Information zum Identifizieren eines zur Detektion des Detektionsobjekts verwendeten Sensors, Abstandsinformation für einen relativen Abstand zu dem Detektionsobjekt oder Geschwindigkeitsinformation für eine Geschwindigkeit des Detektionsobjekts.

## Revendications

1. Procédé d'émission d'un message V2X mis en œuvre par un dispositif de communication V2X d'un véhicule, le procédé comprenant :
recevoir (S28010), à partir d'un dispositif de communication V2X externe, un premier message de perception collective, CP, fournissant des informations d'ID identifiant le dispositif de communication V2X externe et des informations de position indiquant la position du dispositif de communication V2X externe ;
générer (S28020) un second message CP comportant des informations pour au moins un objet de détection détecté par le dispositif de communication V2X ; et
émettre (S28030) le second message CP,
**caractérisé en ce que**
lorsque le dispositif de communication V2X externe n'est pas déterminé comme étant le même objet que l'objet de détection, le second message CP comprend des premières informations d'objet fournissant une description de l'objet de détection, et
dans lequel lorsque le dispositif de communication V2X externe est déterminé comme étant le même objet que l'objet de détection, le second message CP comprend des secondes informations d'objet différentes des premières informations d'objet, lesdites secondes informations d'objet ayant une taille inférieure aux premières informations d'objet et comprenant les informations d'ID du dispositif de communication V2X externe.

2. Procédé selon la revendication 1, dans lequel les premières informations d'objet comprennent au moins l'une d'informations d'ID d'objet pour identifier l'objet de détection, d'informations d'ID de capteur pour identifier un capteur utilisé pour la détection de l'objet de détection, d'informations de distance pour une distance relative à l'objet de détection, ou d'informations de vitesse pour une vitesse de l'objet de détection.

3. Dispositif de communication V2X d'un véhicule, comprenant :
une mémoire (S27030) configurée pour stocker des données ;
une unité de communication (S27010) configurée pour émettre et recevoir un signal sans fil comprenant un message V2X ; et
un processeur (S27020) configuré pour contrôler la mémoire et l'unité de communication,
dans lequel le processeur est en outre configuré pour :
recevoir, à partir d'un dispositif de communication V2X externe, un premier message de perception collective, CP, fournissant des informations d'ID identifiant le dispositif de communication V2X externe et des informations de position indiquant la position du dispositif de communication V2X externe ;
générer un second message CP pour au moins un objet de détection détecté par le dispositif de communication V2X ; et
émettre le second message CP,
**caractérisé en ce que** le processeur est en outre configuré pour
lorsque le dispositif de communication V2X externe n'est pas déterminé comme étant le même objet que l'objet de détection, le second message CP comprend des premières informations d'objet fournissant une description de l'objet de détection, et
dans lequel lorsque le dispositif de communication V2X externe est déterminé comme étant le même objet que l'objet de détection, le second message CP comprend des secondes informations d'objet différentes des premières informations d'objet, lesdites secondes informations d'objet ayant une taille inférieure aux premières informations d'objet et comprenant les informations d'ID du dispositif de communication V2X externe.

4. Dispositif de communication V2X selon la revendication 3, dans lequel les premières informations d'objet comprennent au moins l'une d'informations d'ID d'objet pour identifier l'objet de détection, d'informations d'ID de capteur pour identifier un capteur utilisé pour la détection de l'objet de détection, d'informations de distance pour une distance relative à l'objet de détection, ou d'informations de vitesse pour une vitesse de l'objet de détection.
